# EUROPEAN PATENT APPLICATION

(11) **EP 4 765 960 A1**
(43) Date of publication of application: **24.06.2026**
(21) Application number: 24856683.8
(22) Date of filing: 30.07.2024
(51) Int. Cl.: H04W 48/20, H04W 48/16, H04W 24/08, H04W 76/18, H04W 76/19, H04W 84/06, H04W 88/08, H04W 88/06

(54) **ELECTRONIC DEVICE SUPPORTING NON-TERRESTRIAL NETWORK COMMUNICATION, AND OPERATION METHOD THEREOF**

(30) Priority: 23.08.2023 KR 20230110820; 25.09.2023 KR 20230128450
(71) Applicant: Samsung Electronics Co., Ltd., Suwon-si, Gyeonggi-do 16677 (KR)
(72) Inventor: KIM, Hyejeong, Suwon-si, Gyeonggi-do 16677 (KR); KIM, Hong, Suwon-si, Gyeonggi-do 16677 (KR)
(74) Representative: Gulde & Partner
(86) International application number: PCT/KR2024/011113
(87) International publication number: WO 2025/042070

(57) **Abstract**

A storage medium for storing at least one computer-readable instruction may be provided according to an embodiment. The at least one instruction, when executed by at least one processor of an electronic device, may cause the electronic device to perform at least one operation. The at least one operation may include an operation for performing a scan for non-terrestrial network communication on the basis of identifying a failure in terrestrial network communication performed through terrestrial network cells. The at least one operation may include an operation for detecting a non-terrestrial network cell on the basis of the scan result. The at least one operation may include an operation for identifying whether at least one terrestrial network cell identified before identifying the failure of the terrestrial network communication is one of a plurality of boundary cells associated with a region dedicated to non-terrestrial network communication. The at least one operation may include an operation for performing at least one operation for access based on the non-terrestrial network cell, on the basis that the identified at least one terrestrial network cell among the terrestrial network cells is identified as one of the plurality of boundary cells. Various other embodiments are possible.

## Description

### [Technical Field]

An embodiment of the disclosure relates to an electronic device supporting non-terrestrial network communication and a method for operating the same.

### [Background Art]

Recently, electronic devices supporting non-terrestrial network communication (e.g., satellite communication) are being actively introduced. As an example, an electronic device may communicate with a satellite of a satellite communication company by using the frequency and communication scheme of the company. As an example, an electronic device may communicate with a satellite using a long-term evolution (LTE) standard cellular frequency based on the LTE standard (or 5G standard). As an example, an electronic device may communicate with a satellite based on the 5G non-terrestrial networks (NTN) standard. In a wireless communication system, an electronic device (e.g., user equipment (UE)) may access a wireless communication network and use a voice communication or data communication service in a fixed position or on the move.

The above-described information may be provided as related art for the purpose of helping understanding of the disclosure. The foregoing cannot be claimed as, or used to determine, the prior art related to the disclosure.

### [Detailed Description of the Invention]

### [Technical Solution]

According to an embodiment, a storage medium storing at least one computer-readable instruction may be provided. The at least one instruction may, when executed by at least one processor of an electronic device, cause the electronic device to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The at least one operation may include performing at least one operation for access based on the non-terrestrial network cell based on a terrestrial network cell of the identified at least one terrestrial network cell being identified as one of the plurality of boundary cells.

According to an embodiment, an electronic device may comprise memory storing at least one instruction. The electronic device may comprise a processor connected to the memory. The at least one instruction may, when executed by the processor, cause the electronic device to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The at least one operation may include performing at least one operation for access based on the non-terrestrial network cell based on a terrestrial network cell of the identified at least one terrestrial network cell being identified as one of the plurality of boundary cells.

According to an embodiment, a method of operating an electronic device may include performing a scan for non-terrestrial network communication based on identifying a failure of terrestrial network communication performed via a terrestrial network cell. The method of operating the electronic device may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The method of operating the electronic device may include performing at least one operation for access based on the non-terrestrial network cell based on a terrestrial network cell of the identified at least one terrestrial network cell being identified as one of the plurality of boundary cells.

According to an embodiment, a storage medium storing at least one computer-readable instruction may be provided. The at least one instruction may, when executed by at least one processor of an electronic device, cause the electronic device to perform at least one operation. The at least one operation may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The at least one operation may include performing a scan for non-terrestrial network communication based on a terrestrial network cell of the identified at least one terrestrial network cell being identified as one of the plurality of boundary cells.

According to an embodiment, an electronic device may comprise memory storing at least one instruction. The electronic device may comprise a processor connected to the memory. The at least one instruction may, when executed by the processor, cause the electronic device to perform at least one operation. The at least one operation may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The at least one operation may include performing a scan for non-terrestrial network communication based on a terrestrial network cell of the identified at least one terrestrial network cell being identified as one of the plurality of boundary cells.

According to an embodiment, a method of operating an electronic device may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The method of operating the electronic device may include performing a scan for non-terrestrial network communication based on a terrestrial network cell of the identified at least one terrestrial network cell being identified as one of the plurality of boundary cells.

According to an embodiment, a storage medium storing at least one computer-readable instruction may be provided. The at least one instruction may, when executed by at least one processor of an electronic device, cause the electronic device to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include performing at least one operation for access based on the non-terrestrial network cell based on at least one terrestrial network cell identified before identifying the failure of the terrestrial network communication being a first cell. The at least one operation may include refraining from performing the at least one operation for access based on the non-terrestrial network cell based on at least one terrestrial network cell identified before identifying the failure of the terrestrial network communication being a second cell different from the first cell.

According to an embodiment, an electronic device may comprise memory storing at least one instruction. The electronic device may comprise a processor connected to the memory. The at least one instruction may, when executed by the processor, cause the electronic device to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include performing at least one operation for access based on the non-terrestrial network cell based on at least one terrestrial network cell identified before identifying the failure of the terrestrial network communication being a first cell. The at least one operation may include refraining from performing the at least one operation for access based on the non-terrestrial network cell based on at least one terrestrial network cell identified before identifying the failure of the terrestrial network communication being a second cell different from the first cell.

According to an embodiment, a method of operating an electronic device may include performing a scan for non-terrestrial network communication based on identifying a failure of terrestrial network communication performed via a terrestrial network cell. The method of operating the electronic device may include detecting a non-terrestrial network cell based on the result of the scan. The method of operating the electronic device may include performing at least one operation for access based on the non-terrestrial network cell based on at least one terrestrial network cell identified before identifying the failure of the terrestrial network communication being a first cell. The method of operating the electronic device may include refraining from performing the at least one operation for access based on the non-terrestrial network cell based on at least one terrestrial network cell identified before identifying the failure of the terrestrial network communication being a second cell different from the first cell.

### [Brief Description of Drawings]

FIG. 1 is a block diagram illustrating an electronic device in a network environment according to an embodiment.
FIG. 2 is a view illustrating an electronic device and a long-range communication network environment according to an embodiment.
FIG. 3 is a view illustrating access to an electronic device according to an embodiment.
FIG. 4 is a view illustrating a non-terrestrial network system according to an embodiment.
FIG. 5A is a flowchart illustrating an operation method of an electronic device according to an embodiment.
FIG. 5B is a view illustrating a boundary cell according to an embodiment.
FIG. 5C is a flowchart illustrating an operation method of an electronic device according to an embodiment.
FIG. 6 is a flowchart illustrating an operation method of an electronic device according to an embodiment.
FIG. 7A is a flowchart illustrating an operation method of an electronic device according to an embodiment.
FIGS. 7B and 7C are views illustrating movement of an electronic device.
FIG. 8A is a flowchart illustrating an operation method of an electronic device according to an embodiment.
FIG. 8B is a view illustrating movement of an electronic device.
FIG. 9 is a flowchart illustrating an operation method of an electronic device according to an embodiment.
FIG. 10 is a flowchart illustrating an operation method of an electronic device according to an embodiment.
FIG. 11A is a flowchart illustrating an operation method of an electronic device according to an embodiment.
FIG. 11B is a view illustrating information on boundary cells for each area according to an embodiment.
FIG. 12 is a flowchart illustrating an operation method of an electronic device according to an embodiment.
FIG. 13A is a flowchart illustrating an operation method of an electronic device according to an embodiment.
FIG. 13B is a flowchart illustrating an operation method of an electronic device according to an embodiment.
FIG. 13C is a flowchart illustrating an operation method of an electronic device according to an embodiment.
FIG. 13D is a flowchart illustrating an operation method of an electronic device according to an embodiment.
FIG. 13E is a flowchart illustrating an operation method of an electronic device according to an embodiment.

### [Mode for Carrying out the Invention]

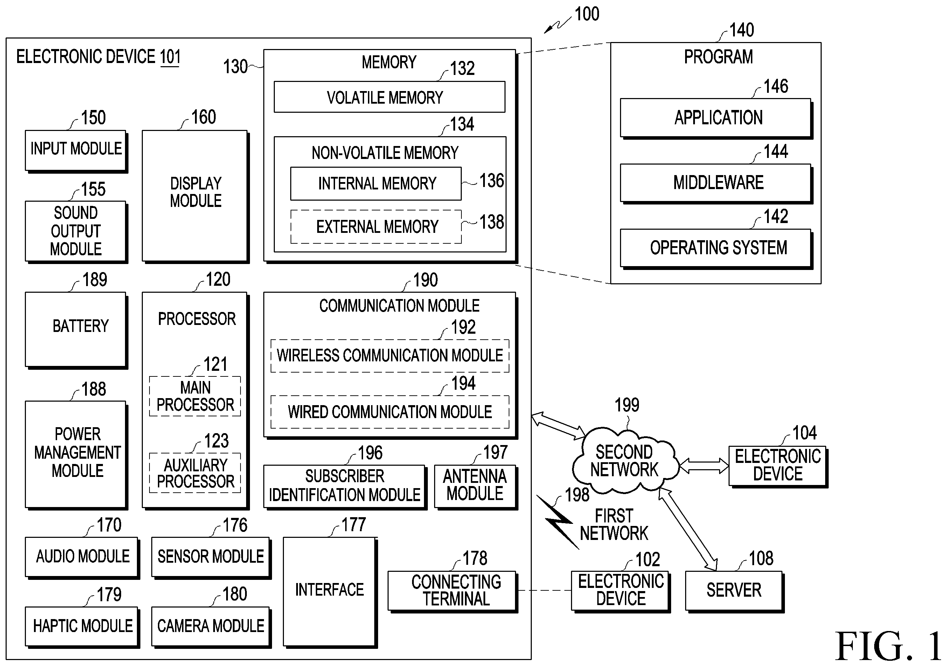

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

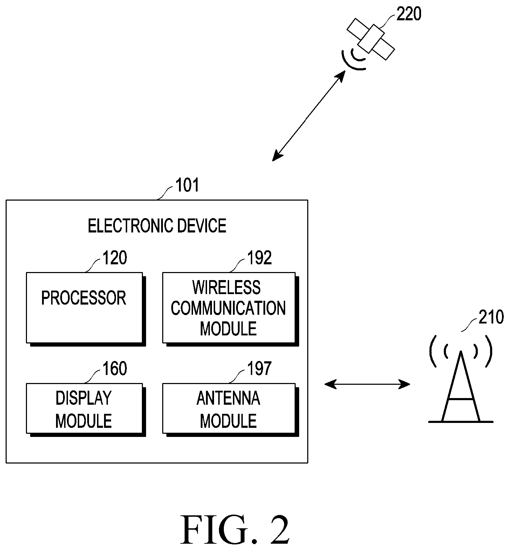

FIG. 2 is a view illustrating an electronic device and a long-range communication network environment according to an embodiment;

The electronic device 101 may transmit and/or receive data through a terrestrial network and/or a non-terrestrial network. The electronic device 101 may have the same as the configuration of the electronic device 101 illustrated in FIG. 1 or may include the configuration of the electronic device 101 illustrated in FIG. 1.

The terrestrial network may refer to a network capable of providing data communication through the terrestrial wireless communication device 210. For example, the terrestrial wireless communication device 210 may include a base station positioned on the ground (e.g., fixed to the ground). The terrestrial wireless communication device 210 may support at least one of various communication schemes supportable by the electronic device 101. For example, the terrestrial wireless communication device 210 may include an eNodeB (e.g., an LTE-based base station) or a gNodeB (e.g., a 5G (or NR)-based base station), but is not limited thereto.

The non-terrestrial network may refer to a network capable of providing data communication through at least one non-terrestrial wireless communication device 220. For example, the non-terrestrial wireless communication device 220 may include at least one of various communication devices such as a base station and a repeater that are not positioned on the ground. For example, the non-terrestrial wireless communication device 220 may include a satellite and/or an unmanned aerial vehicle, but is not limited thereto. For example, the satellite may include a low-earth orbit (LEO) satellite, a medium-earth orbit (MEO) satellite, a geostationary earth orbit (GEO) satellite, and/or a high elliptical orbit (HEO) satellite. For example, the satellite may include an orbiting satellite and/or a geostationary satellite.

The non-terrestrial wireless communication device 220 may support at least one of various wireless communication schemes. For example, the non-terrestrial wireless communication device 220 may support a non-terrestrial network (NR NTN) defined by 3rd generation partnership project (3GPP). Alternatively, the non-terrestrial wireless communication device 220 may support at least one of communication schemes based on various communication standards such as LTE, global system for mobile communications (GSM), or code-division multiple access (CDMA), but is not limited thereto.

The terrestrial network and the non-terrestrial network may be networks independent of each other. Alternatively, the terrestrial network and the non-terrestrial network may be included in at least one network (e.g., networks provided by the same operator) associated with each other.

When communication with the terrestrial network is not possible or is not seamless, the electronic device 101 may perform wireless communication through the non-terrestrial network. Alternatively, the electronic device 101 may perform wireless communication through the non-terrestrial network regardless of the communication state with the terrestrial network.

According to an embodiment, the electronic device 101 may include a processor 120, a display module 160 (e.g., a display), a wireless communication module 192 (e.g., a communication circuit), and/or an antenna module 197. For example, the processor 120 may be operatively, functionally, and/or electrically connected to the display module 160, the wireless communication module 192, and/or the antenna module 197.

The processor 120 may execute, e.g., instructions (e.g., the program 140 of FIG. 1) at least temporarily stored in memory (e.g., the memory 130 of FIG. 1) to control at least one other component (e.g., a hardware or software component) of the electronic device 101 connected to the processor 120, and may perform various data processing or computation. According to an embodiment, the processor 120 may control overall operations related to terrestrial network communication and/or non-terrestrial network communication. For example, the processor 120 may include a communication processor (e.g., the auxiliary processor 123 of FIG. 1) related to terrestrial network communication and/or non-terrestrial network communication.

The display module 160 may visually provide information to the outside (e.g., a user) of the electronic device 101.

According to an embodiment, the display module 160 may display a user interface (UI) indicating information related to a terrestrial network and/or a non-terrestrial network. For example, the UI indicating information related to the terrestrial network and/or the non-terrestrial network may include at least one of UIs indicating information related to the type of network (e.g., cellular communication (3G, 4G, or 5G), short-range communication (e.g., BT, or WI-FI), or satellite communication), the type of network service provider (e.g., satellite communication service provider (Iridium), emergency service provider (ESP)), the strength of the network signal (e.g., signal strength bars, RSSI, or RSRP)), the direction of the communication device (satellite) included in the network (e.g., the orientation, the elevation angle, or the azimuth angle), presence information, and/or the network communication state (e.g., idle, transmit, or receive).

According to an embodiment, the display module 160 may display a UI indicating the service related to the terrestrial network and/or the non-terrestrial network.

According to an embodiment, the service related to the terrestrial network and/or the non-terrestrial network may include at least one of, e.g., an emergency message transmission service, a messaging service, a voice call, a video call, a data communication service, a location-related service, and/or a service related to an indicator.

According to an embodiment, the emergency message transmission service may include, but is not limited to, at least one of an SOS service state information providing service (e.g., display whether it is possible to provide an SOS service), a government office information providing service, an emergency contact information providing service, a text template providing service that minimizes the user's text entry, or a questionnaires service (e.g., a service for providing questionnaires, such as accident type, injured area, or medical information (e.g., age, gender, disease information, or medication information)) for quickly letting the emergency situation know.

According to an embodiment, the messaging service may include at least one of a short message service (SMS), a multimedia messaging service (MMS), or a rich communication suite (RCS) message, but is not limited thereto.

According to an embodiment, the data communication service may include a service through various applications (e.g., web browsers) that provide data communication.

According to an embodiment, the location-related service may include, but is not limited to, at least one of longitude/latitude coordinates, location-related map information about the non-terrestrial network wireless communication device 220, navigation, or a street view.

According to an embodiment, the UI example is not limited to the above-mentioned example, and may be provided through another output device (e.g., the sound output module 155 of FIG. 1).

According to an embodiment, the wireless communication module 192 may support various types of wireless communication bands supported by the electronic device 101. For example, the wireless communication band supported by the electronic device 101 may include a short-range wireless communication band (e.g., BT or Wi-Fi), a terrestrial network (e.g., cellular network) communication band, and/or a non-terrestrial network band, but is not limited thereto.

According to an embodiment, the electronic device 101 may support a frequency band (e.g., n255, or n256) related to non-terrestrial network wireless communication. The electronic device 101 may perform non-terrestrial network wireless communication using a frequency band related to non-terrestrial network wireless communication, but is not limited thereto. For example, the electronic device 101 may perform non-terrestrial network wireless communication using at least part of the frequency band related to terrestrial network wireless communication.

According to an embodiment, the antenna module 197 may transmit or receive a signal or power to or from the outside (e.g., the external electronic device).

According to an embodiment, the electronic device 101 may perform wireless communication with the non-terrestrial network using at least one antenna among the plurality of antennas included in the antenna module 197. At least one antenna supporting non-terrestrial wireless communication may include a dedicated antenna and/or a multi-use antenna. The dedicated antenna may include an antenna supporting the non-terrestrial network. The multi-use antenna may include an antenna that supports different types of networks and non-terrestrial networks together. For example, the electronic device 101 may communicate with at least one satellite (e.g., a GNSS satellite or a satellite for emergency message service) using at least one non-terrestrial network-dedicated antenna. For example, the multi-use antenna may include an antenna supporting a short-range communication network (e.g., a Bluetooth network or a Wi-Fi network) and/or a terrestrial network (e.g., a long term evolution (LTE) network). The electronic device 101 may support a non-terrestrial network using a plurality of antennas among antennas supporting the terrestrial network.

Hereinafter, in the disclosure, a satellite is mainly mentioned as the non-terrestrial wireless communication device 220, and even if it is mentioned that the satellite provides wireless communication using a specific radio access technology (RAT) (e.g., LTE) or a specific function (e.g., a base station), this is merely an example, and the type thereof is not limited.

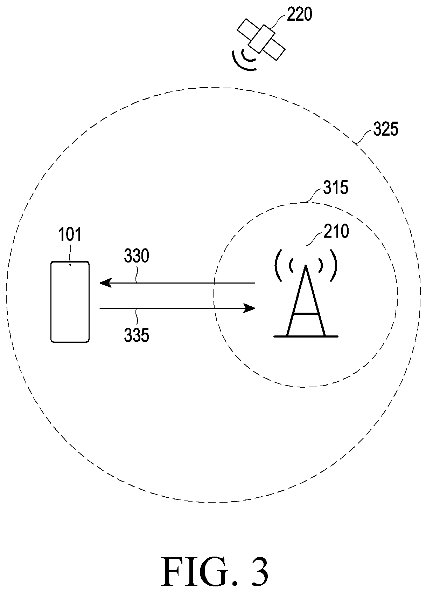

FIG. 3 is a view illustrating access to an electronic device according to an embodiment;

According to an embodiment, the electronic device 101 may be positioned within the coverage 315 (hereinafter, referred to as the terrestrial wireless communication coverage 315) of the terrestrial wireless communication device 210 and/or the coverage 325 (hereinafter, referred to as the non-terrestrial wireless communication coverage 325) of the non-terrestrial wireless communication device 220. The non-terrestrial wireless communication coverage 325 may be relatively larger (e.g., 50 times larger) than the terrestrial wireless communication coverage 315. For example, the non-terrestrial wireless communication coverage 325 may cover an area not covered by the coverage 315 of the terrestrial wireless communication device 210, and accordingly, the electronic device 101 may perform communication even in an area where terrestrial wireless communication is not supported.

According to an embodiment, the electronic device 101 may perform a cell scan within the terrestrial wireless communication coverage 315 and/or the non-terrestrial wireless communication coverage 325. As a result of performing the cell scan, the electronic device 101 may identify a cell provided by the terrestrial wireless communication device 210 and/or a cell provided by the non-terrestrial wireless communication device 220. When there is a cell that meets the cell selection criteria, the electronic device 101 may perform at least some of operations for connecting to a network (e.g., a non-terrestrial network and/or a terrestrial network). Here, the connection to the network may include, e.g., at least some of a preceding operation (e.g., camp-on, or connection procedure (e.g., random connection (RA) procedure)) for registration to the network and/or a registration operation (e.g., attach, or registration)) to the network, but is not limited thereto. When disconnection from the network is required (e.g., moving to another network), the electronic device 101 may perform at least some of the disconnect operations. The operation for disconnecting from the network may include at least some of a detach, release of connection, and/or radio link failure (RLF) declaration from the network, and is not limited to the listed operations.

According to an embodiment, the electronic device 101 may perform at least some of cell scan, disconnection from the network, and/or connection to the network according to movement 330 or 335.

According to an embodiment, when the electronic device 101 is positioned within the terrestrial communication coverage 315 included in the non-terrestrial wireless communication coverage 325 or is positioned in the boundary area of the terrestrial communication coverage 315, the electronic device 101 may connect to the terrestrial network and/or the non-terrestrial network based on the policy (e.g., priority policy) of the electronic device 101.

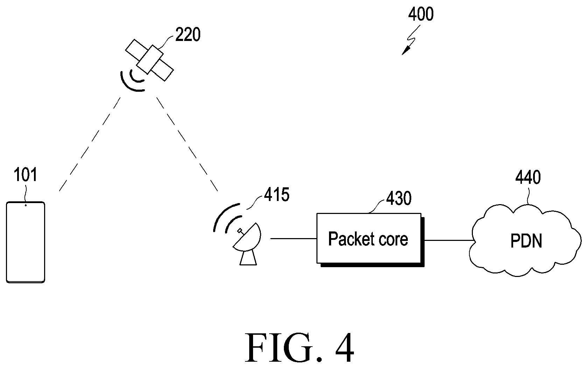

FIG. 4 is a view illustrating a non-terrestrial network system 400 according to an embodiment.

Referring to FIG. 4, a non-terrestrial network system 400 may include a non-terrestrial wireless communication device 220, a radio unit 415, a packet core 430, and/or a PDN 440.

According to an embodiment, the non-terrestrial network system 400 may be implemented, e.g., in a regenerative manner. When implemented in a regenerative manner, the at least one non-terrestrial wireless communication device 220 may include a base station (e.g., eNode B). The non-terrestrial network system 400 may be implemented, e.g., in a bent-pipe manner. The bent-pipe manner may include a passive relay manner that performs frequency conversion and power amplification on the received signal. When the non-terrestrial network system 400 is implemented in a bent-pipe manner, the at least one non-terrestrial wireless communication device 220 may include a relay that converts (e.g., amplifies) and transmits a signal. The implementation method of the non-terrestrial network system 400 and the role of the non-terrestrial wireless communication device 220 described in FIG. 4 are merely examples, and are not limited thereto.

According to an embodiment, the non-terrestrial wireless communication device 220 may include at least one satellite. The non-terrestrial wireless communication device 220 may communicate with, e.g., the electronic device 101 using a terrestrial network (e.g., a cellular network) band and/or a non-terrestrial network band. The terrestrial network band may be, e.g., an operating band supported by long term evolution (LTE) and/or new radio (NR), but is not limited thereto. The non-terrestrial network band may include a band (e.g., n255 and/or n256 bands) defined by 3GPP, but is not limited thereto.

According to an embodiment, the at least one radio unit 415 may receive a signal of the non-terrestrial wireless communication device 220 and transmit the signal to the packet core 430. The radio unit 415 and the non-terrestrial wireless communication device 220 may perform communication using, e.g., a non-terrestrial network band. The non-terrestrial network band may be different from the terrestrial network band, but may be set to be the same in some cases.

According to an embodiment, the at least one packet core 430 may transmit and receive data associated with the electronic device 101 using the radio unit 415. Accordingly, the packet core 430 may process the data associated with the electronic device 101 and transmit the processed data to a packet data network (PDN) 440 (e.g., the Internet). The packet core 430 may include, e.g., at least some of an evolved packet core (EPC) and/or a 5G core (5GC), but is not limited thereto. The packet core 430 may include a packet core associated with the operator of the non-terrestrial wireless communication device 220 and/or a packet core associated with the mobile network operator (MNO). The packet core 430 may be additionally connected to a public switched telephone network (PSTN) (not illustrated) to transmit and receive data associated with the electronic device 101.

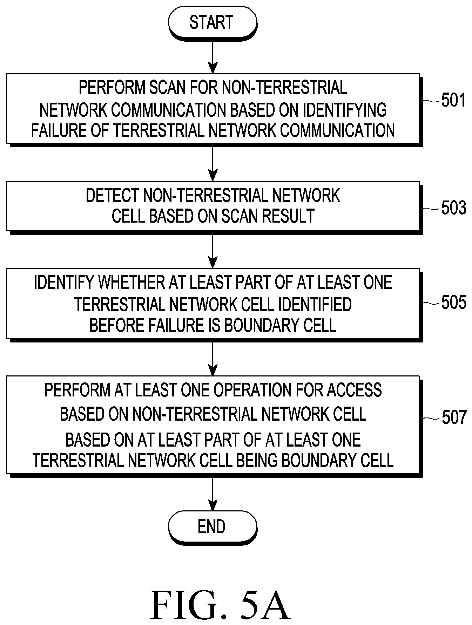

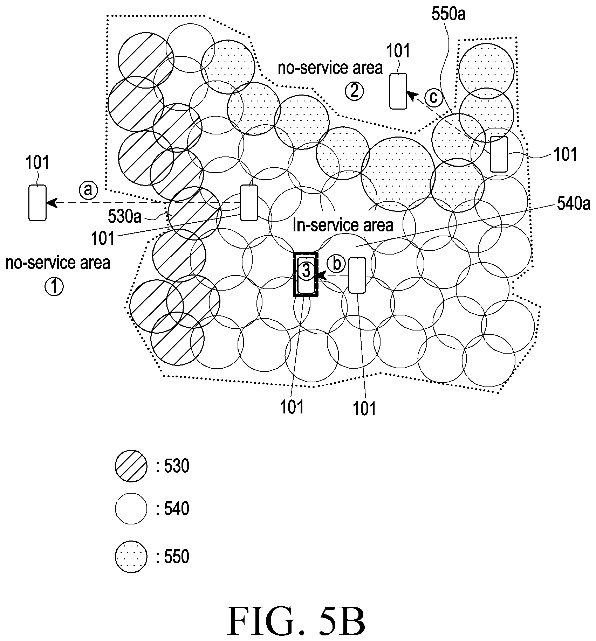

FIG. 5A is a flowchart illustrating an operation method of an electronic device according to an embodiment; The embodiment of FIG. 5A is described with reference to FIG. 5B. FIG. 5B is a view illustrating a boundary cell according to an embodiment.

According to an embodiment, an electronic device 101 (e.g., the processor 120) may perform a scan for non-terrestrial network communication based on identifying a failure of terrestrial network communication in operation 501. For example, the electronic device 101 may identify the failure based on leaving coverage of a terrestrial network cell, entering a shadow area, and/or a weak electric field, but there is no limitation on the cause of the failure. For example, even when a signal of terrestrial network communication enabling normal communication is not detected and only a limited cell enabling only emergency service (e.g., emergency call, but without limitation) is detected, it may be identified as a failure of the terrestrial network communication, but there is no limitation. For example, as in FIG. 5B, the electronic device 101 may enter a first area (①), a second area (②), or a third area (③) where no terrestrial network cell is deployed, and in this case, the electronic device 101 may identify a failure of the terrestrial network communication, but this is exemplary and there is no limitation on conditions and/or causes of the failure of the terrestrial network communication. The electronic device 101 may perform a scan for non-terrestrial network communication immediately based on identifying a failure of terrestrial network communication performed via a terrestrial network cell. Alternatively, the electronic device 101 may perform at least one scan for terrestrial network communication based on identifying the failure of the terrestrial network communication and perform a scan for non-terrestrial network communication upon failing to detect a terrestrial network cell, without limitation.

The electronic device 101 may detect a non-terrestrial network cell based on the result of the scan for non-terrestrial network communication in operation 503. The electronic device 101 may identify whether at least part of at least one terrestrial network cell identified before the failure of the terrestrial network communication is a boundary cell in operation 505. For example, the electronic device 101 may identify whether at least one terrestrial network cell identified before identifying the failure of the non-terrestrial network communication is one of a plurality of cells associated with a non-terrestrial network communication dedicated area. Here, a boundary cell may mean a terrestrial network cell disposed on a boundary of a non-terrestrial network communication dedicated area (or terrestrial network communication unsupported area) or disposed adjacent to the boundary. A boundary cell may be named, e.g., a geo-fence cell, a cell disposed at the boundary of a non-terrestrial network communication dedicated area, a cell disposed adjacent to the boundary of a non-terrestrial network communication dedicated area, without limitation. For example, a boundary cell may mean a cell providing a first type of information configured to cause access to a non-terrestrial network cell. The first type of information may be, e.g., broadcast information (e.g., system information block (SIB), but without limitation). The first type of information may be provided through, e.g., higher layer signaling. For example, the first type of information may be provided through signaling by an operator server, and there is no limitation on the provision method. For example, a boundary cell may mean a cell mapped to the first type of information configured to cause access to a non-terrestrial network cell in information provided by a network operator. For example, when no other adjacent terrestrial network cell is located within a designated distance in any direction from a first terrestrial network cell, the first terrestrial network cell may be defined as a boundary cell, but this is exemplary and there is no limitation on the definition (or configuration conditions) of a boundary cell.

For example, in the example of FIG. 5B, the first area (①) may be a non-terrestrial network communication dedicated area, the second area (②) may be a non-terrestrial network communication dedicated area, and the third area (③) may not be a non-terrestrial network communication dedicated area.

According to an embodiment, a no-service area may include the first area (①) and the second area (②) in the example of FIG. 5B, and the no-service area may be, e.g., an area where terrestrial network communication is impossible and not covered by a cellular terrestrial network. Meanwhile, an in-service area may be an area where terrestrial network communication is possible with a cellular terrestrial network installed. The in-service area may include an area corresponding to the third area (③) (e.g., coverage hole) where a terrestrial network is installed but the terrestrial network may not be used.

For example, the third area (③) is an area not covered by the coverage of a terrestrial network cell, but coverage of an adjacent terrestrial network cell may be located at a relatively close distance from the third area (③). The third area (③) may be represented as, e.g., a coverage hole. If the electronic device 101 is temporarily located in the third area (③), the electronic device 101 may identify a failure of the terrestrial network communication. Further, when the electronic device 101 is located in the third area (③), it may detect a non-terrestrial network cell. When the electronic device 101 immediately accesses a non-terrestrial network cell in the third area (③) upon detecting the non-terrestrial network cell, at least one problem may arise. For example, the electronic device 101 has a relatively high possibility of leaving the third area (③) at a relatively early time, and the electronic device 101 has a relatively high possibility of performing access based on a terrestrial network cell again. In this case, although there is a high possibility that the electronic device 101 will return to a terrestrial network cell again, resources for access to the non-terrestrial network cell may be wasted. For example, a non-terrestrial network cell may have relatively low capacity, and delays may occur when multiple user equipment (UE) perform access. It may be preferable for a relatively small number of user equipment to perform access to a non-terrestrial network cell, and accordingly, the third area (③) may not be configured as a non-terrestrial network communication dedicated area. In contrast, the first area (①) and the second area (②) may be configured as non-terrestrial network communication dedicated areas. Cells 530, 550 disposed on the boundary (or disposed adjacent to the boundary) of the first area (①) and the second area (②) may be configured as boundary cells. Other cells 540 may be configured as non-boundary cells. A boundary cell may be configured by, e.g., a network operator, but there is no limitation on the configuration subject and/or method.

The electronic device 101 may perform at least one operation for access based on the non-terrestrial network cell based on at least part of at least one terrestrial network cell identified before the failure being a boundary cell in operation 507. For example, the electronic device 101 may perform at least one operation for access based on the non-terrestrial network cell based on a terrestrial network cell of at least one cell identified before the failure being one of a plurality of boundary cells. For example, the electronic device 101 may perform, as at least one operation for access, a camp-on procedure for an identified cell, a random access (RA) procedure, a connection establishment (e.g., RRC connection establishment) procedure, and/or an attach (or registration) procedure to a core network, as at least one operation for access to the identified cell, but without limitation.

Referring to FIG. 5B, in an example, the electronic device 101 may move along a first path (ⓐ). The electronic device 101 may enter the first area (①) through the coverage of a first terrestrial network cell 530a. In the coverage of the first terrestrial network cell 530a, the electronic device 101 may identify the first terrestrial network cell 530a. For example, the electronic device 101 may camp on the first terrestrial network cell 530a and may identify identification information of the first terrestrial network cell 530a during this process. For example, the electronic device 101 may cell reselect the first terrestrial network cell 530a in a radio resource control (RRC) idle state and may identify identification information of the first terrestrial network cell 530a during this process. For example, the electronic device 101 may handover to the first terrestrial network cell 530a in an RRC connected state and may identify identification information of the first terrestrial network cell 530a during this process. For example, even when the signal strength from the first terrestrial network cell 530a does not satisfy a cell reselection condition, the signal strength from the first terrestrial network cell 530a does not satisfy a reporting condition, or a handover command is not received even after performing a measurement report for the first terrestrial network cell 530a, the identification information of the first terrestrial network cell 530a may be identified. As described above, there is no limitation on the method and/or timing for the electronic device 101 to identify the first terrestrial network cell 530a. Meanwhile, the first terrestrial network cell 530a may be a boundary cell. The electronic device 101 may store information about boundary cells in advance, and the method of obtaining boundary cells is described below. The electronic device 101 may identify whether the identification information (e.g., physical cell identifier (PCI), but without limitation) of the first terrestrial network cell 530a identified before the failure of the terrestrial network communication is a boundary cell by referring to the pre-stored information. Based on the first terrestrial network cell 530a being a boundary cell, the electronic device 101 may perform at least one operation for access based on the detected non-terrestrial network cell.

In an example, the electronic device 101 may move along a third path (ⓒ). The electronic device 101 may enter the second area (②) through the coverage of a third terrestrial network cell 550a. In the coverage of the third terrestrial network cell 550a, the electronic device 101 may identify the third terrestrial network cell 550a. The third terrestrial network cell 550a may be a boundary cell. The electronic device 101 may identify whether the identification information (e.g., PCI, but without limitation) of the third terrestrial network cell 550a identified before the failure of the terrestrial network communication is a boundary cell by referring to the pre-stored information. Based on the third terrestrial network cell 550a being a boundary cell, the electronic device 101 may perform at least one operation for access based on the detected non-terrestrial network cell.

In an example, the electronic device 101 may move along a second path (ⓑ). The electronic device 101 may enter the third area (③) through the coverage of a second terrestrial network cell 540a. In the coverage of the second terrestrial network cell 540a, the electronic device 101 may identify the second terrestrial network cell 540a. The second terrestrial network cell 540a may not be a boundary cell. The electronic device 101 may identify whether the identification information (e.g., PCI, but without limitation) of the second terrestrial network cell 540a identified before the failure of the terrestrial network communication is a boundary cell by referring to the pre-stored information. Based on the second terrestrial network cell 540a not being a boundary cell, the electronic device 101 may refrain from performing at least one operation for access based on the detected non-terrestrial network cell. Accordingly, even when a non-terrestrial network cell is detected in the third area (③), the electronic device 101 may not perform access based on the non-terrestrial network cell, so resources of the non-terrestrial network cell may be saved. For example, when a terrestrial network cell is not detected in the third area (③), the electronic device 101 may not perform operations for access to a non-terrestrial network cell or search, scan for a non-terrestrial network cell, and accordingly resources for attempting search, scan and/or detection for a non-terrestrial network cell may be saved.

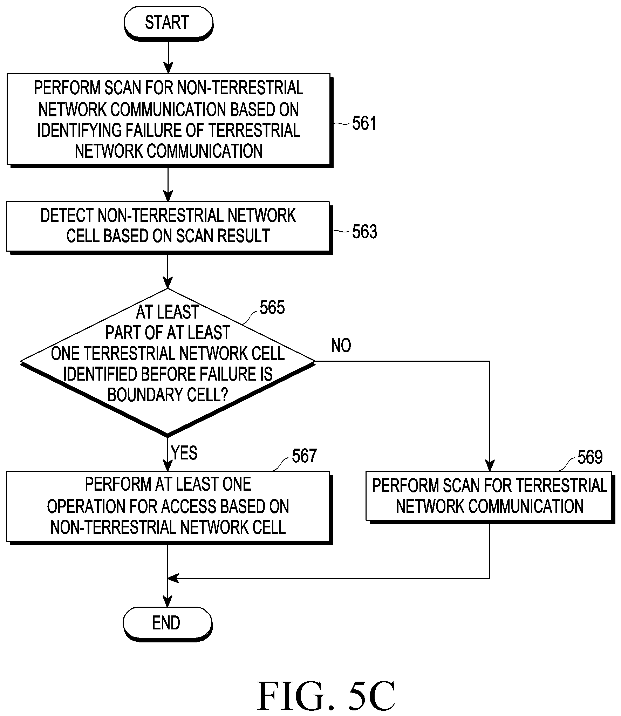

FIG. 5C is a flowchart illustrating an operation method of an electronic device according to an embodiment;

According to an embodiment, an electronic device 101 (e.g., the processor 120) may perform a scan for non-terrestrial network communication based on identifying a failure of terrestrial network communication in operation 561. The electronic device 101 may detect a non-terrestrial network cell based on the scan result in operation 563. The electronic device 101 may identify whether at least part of at least one terrestrial network cell identified before the failure is a boundary cell in operation 565. For example, the electronic device 101 may identify whether at least part of at least one terrestrial network cell identified before the failure is a boundary cell using pre-stored information about boundary cells, but without limitation. If it is identified that at least part of at least one terrestrial network cell is a boundary cell (operation 565-Yes), the electronic device 101 may perform at least one operation for access based on the non-terrestrial network cell in operation 567. If it is identified that at least part of at least one terrestrial network cell is not a boundary cell (operation 565-No), the electronic device 101 may refrain from performing at least one operation for access based on the non-terrestrial network cell (or ignore the non-terrestrial network cell, or defer access to the non-terrestrial network cell) and perform a scan for terrestrial network communication in operation 569. For example, the electronic device 101 may refrain from performing a scan for non-terrestrial network communication, but without limitation.

As described above with reference to FIG. 5B, the electronic device 101 may identify a failure of the terrestrial network communication in the third area (③) and identify that at least one cell identified before the failure is not a boundary cell. When at least one cell is not a boundary cell, the electronic device 101 may refrain from performing at least one operation for access based on the non-terrestrial network cell in the third area (③) (or ignore the non-terrestrial network cell or defer access to the non-terrestrial network cell) and perform a scan for terrestrial network communication. If the electronic device 101 enters coverage of a terrestrial network cell adjacent to the third area (③), the electronic device 101 may detect a terrestrial network cell according to the scan result for terrestrial network communication. The electronic device 101 may perform at least one operation for access based on the detected terrestrial network cell.

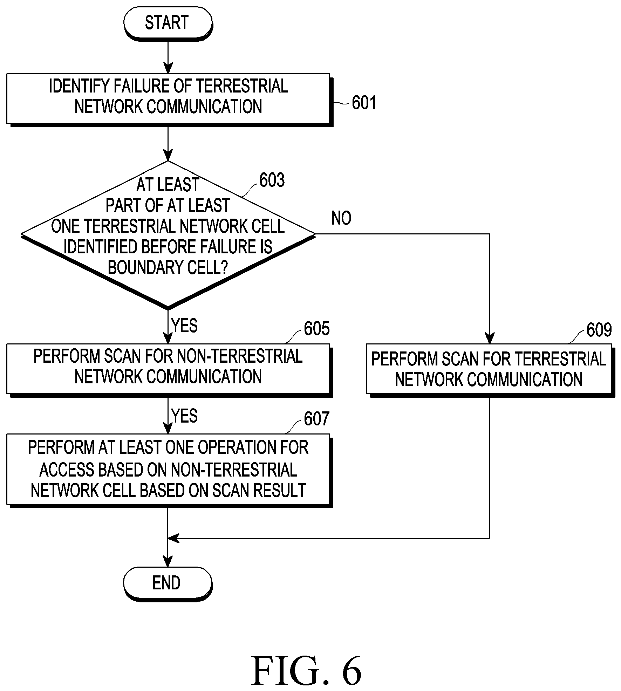

FIG. 6 is a flowchart illustrating an operation method of an electronic device according to an embodiment.

According to an embodiment, an electronic device 101 (e.g., the processor 120) may identify a failure of terrestrial network communication in operation 601. The electronic device 101 may identify whether at least part of at least one terrestrial network cell identified before identifying the failure of the terrestrial network communication is a boundary cell associated with a non-terrestrial network communication dedicated area based on identifying the failure of the terrestrial network communication in operation 603. For example, the electronic device 101 may immediately identify whether at least part of at least one terrestrial network cell identified before identifying the failure of the terrestrial network communication is a boundary cell associated with a non-terrestrial network communication dedicated area based on identifying the failure of the terrestrial network communication. Alternatively, the electronic device 101 may perform at least one scan for terrestrial network communication based on identifying the failure of the terrestrial network communication and identify whether at least part of at least one terrestrial network cell identified before identifying the failure of the terrestrial network communication is a boundary cell associated with a non-terrestrial network communication dedicated area upon failing to detect a terrestrial network cell, without limitation.

According to an embodiment, when it is identified that at least part of at least one terrestrial network cell identified before identifying the failure of the terrestrial network communication is a boundary cell associated with a non-terrestrial network communication dedicated area (operation 603-Yes), the electronic device 101 may perform a scan for non-terrestrial network communication in operation 605. An non-terrestrial network cell may be detected according to the scan result for non-terrestrial network communication. The electronic device 101 may perform at least one operation for access based on the non-terrestrial network cell based on the scan result in operation 607. If a non-terrestrial network cell is not detected according to the scan result for non-terrestrial network communication, the electronic device 101 may perform a scan for terrestrial network communication. If it is not identified that at least part of at least one terrestrial network cell identified before identifying the failure of the terrestrial network communication is a boundary cell associated with a non-terrestrial network communication dedicated area (operation 603-No), the electronic device 101 may perform a scan for terrestrial network communication in operation 609. In this case, the electronic device 101 may refrain from performing a scan for non-terrestrial network communication.

If the electronic device 101 is located in the first area (①) or the second area (②) in the example of FIG. 5B, it may identify a failure of the terrestrial network communication and identify that at least one cell identified before the failure is a boundary cell. In this case, the electronic device 101 may perform a scan for non-terrestrial network communication in the first area (①) or the second area (②). If the electronic device 101 detects a non-terrestrial network cell in the first area (①) or the second area (②), the electronic device 101 may perform at least one operation for access based on the detected non-terrestrial network cell. For example, the electronic device 101 may identify a failure of the terrestrial network communication in the third area (③) and identify that at least one cell identified before the failure is not a boundary cell. In this case, the electronic device 101 may refrain from performing a scan for non-terrestrial network communication in the third area (③). As the electronic device 101 refrains from performing a scan for non-terrestrial network communication, the electronic device 101 may not detect a non-terrestrial network cell in the third area (③). Accordingly, as procedures for access to a non-terrestrial network cell by a user device located in the third area (③) are prevented, resources for non-terrestrial network communication may be saved.

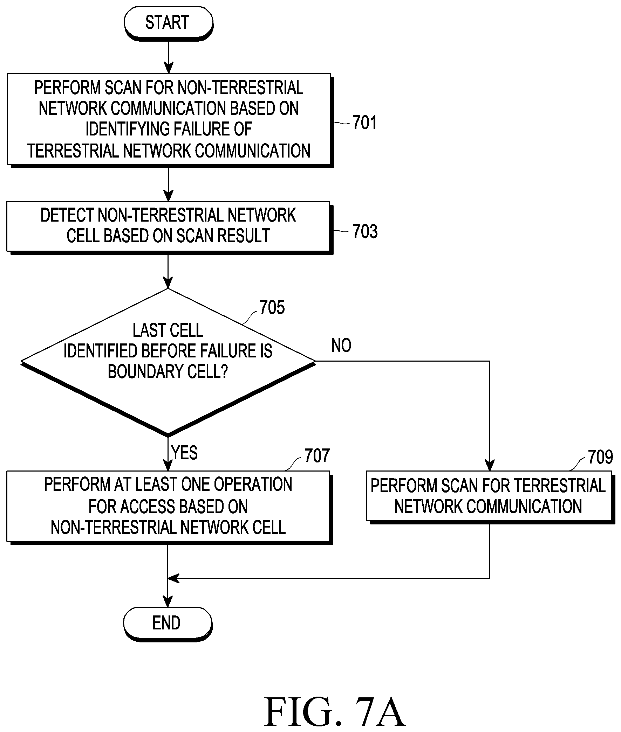

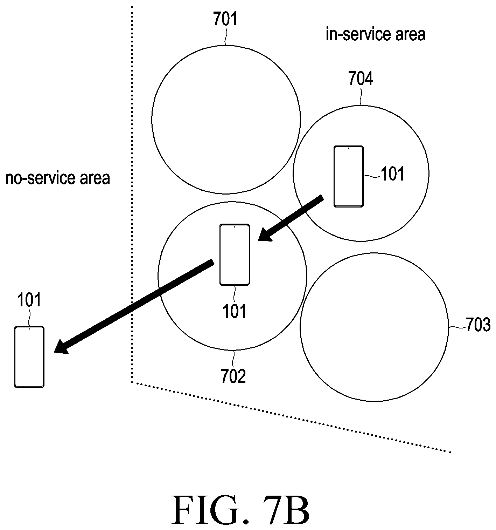

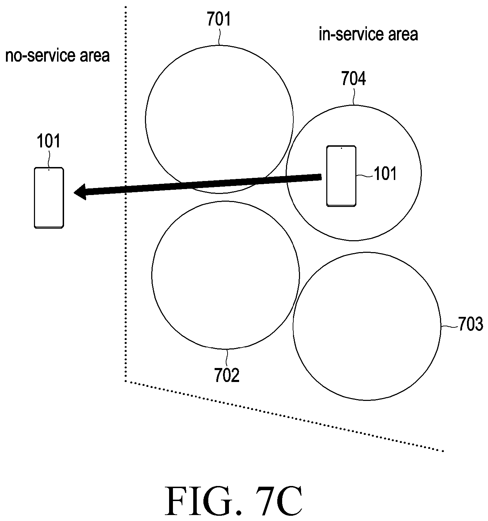

FIG. 7A is a flowchart illustrating an operation method of an electronic device according to an embodiment. The embodiment of FIG. 7A is described with reference to FIGS. 7B and 7C. FIGS. 7B and 7C are views illustrating movement of an electronic device.

According to an embodiment, an electronic device 101 (e.g., the processor 120) may perform a scan for non-terrestrial network communication based on identifying a failure of terrestrial network communication in operation 701. The electronic device 101 may detect a non-terrestrial network cell based on the scan result in operation 703. The electronic device 101 may identify whether a last identified cell before the failure of the terrestrial network communication is a boundary cell in operation 705. If it is identified that the last identified cell before the failure of the terrestrial network communication is a boundary cell (operation 705-Yes), the electronic device 101 may perform at least one operation for access based on the non-terrestrial network cell in operation 707. If it is identified that the last identified cell before the failure of the terrestrial network communication is not a boundary cell (operation 705-No), the electronic device 101 may perform a scan for terrestrial network communication in operation 709. The electronic device 101 may refrain from performing a scan for non-terrestrial network communication. For example, referring to FIG. 7B, the electronic device 101 may move in an area (e.g., in-service area) where a plurality of terrestrial network cells 701, 702, 703, 704 are deployed. For example, it is assumed that a first terrestrial network cell 701 and a second terrestrial network cell 702 are boundary cells, and a third terrestrial network cell 703 and a fourth terrestrial network cell 704 are configured as general cells that are not boundary cells. The electronic device 101 may pre-store information that, e.g., the first terrestrial network cell 701 and the second terrestrial network cell 702 are boundary cells, and the timing and/or method of obtaining the information is described below. At a first time, the electronic device 101 may be located within the coverage of the fourth terrestrial network cell 704. At a second time, the electronic device 101 may be located within the coverage of the second terrestrial network cell 702. In an example, the electronic device 101 may cell reselect the second terrestrial network cell 702 in an RRC idle state while camping on the first terrestrial network cell 701. The electronic device 101 may camp on the second terrestrial network cell 702 according to the cell reselection. In an example, the electronic device 101 may receive a handover command to the second terrestrial network cell 702 in an RRC connected state while connected to the first terrestrial network cell 701. The electronic device 101 may perform at least one operation for access to the second terrestrial network cell 702 according to the handover command. As described above, the electronic device 101 may identify the second terrestrial network cell 702 based on camping on and/or handover to the second terrestrial network cell 702. For example, the electronic device 101 may store time-series information about identified cells as illustrated in Table 1.

**[Table 1]**

| time | identified cell information |
|---|---|
| T2 | PCI_2 |
| T1 | PCI_4 |
| ... | ... |

For example, the electronic device 101 may identify the fourth terrestrial network cell 704 at the first time (T1) and identify the second terrestrial network cell 702 at the second time (T2), and based on this, may store information as illustrated in Table 1. For example, the electronic device 101 may update information about the corresponding terrestrial network cell based on camping on and/or RRC connection establishment, but without limitation, and may update information when identification information of a terrestrial network cell is identified. The electronic device 101 may identify a failure of the terrestrial network communication after the second time (T2). The electronic device 101 may perform a scan for non-terrestrial network communication based on the failure of the terrestrial network communication and detect a non-terrestrial network cell according to the scan result. The electronic device 101 may identify whether the second terrestrial network cell 702, which is the last identified terrestrial network cell before the failure of the terrestrial network communication, is a boundary cell. Based on the last identified second terrestrial network cell 702 being a boundary cell, it may perform at least one operation for access based on the detected non-terrestrial network cell.

Meanwhile, in another example, the electronic device 101 may identify a failure of the terrestrial network communication after the second time (T2) and based on this, identify whether the second terrestrial network cell 702, which is the last identified terrestrial network cell before the failure of the terrestrial network communication, is a boundary cell. Based on the second terrestrial network cell 702 being a boundary cell, the electronic device 101 may be configured to perform a non-terrestrial network scan.

For example, referring to FIG. 7C, the electronic device 101 may move in an area where a plurality of terrestrial network cells 701, 702, 703, 704 are deployed. At a first time, the electronic device 101 may be located within the coverage of the fourth terrestrial network cell 704. At a second time, the electronic device 101 may be located within the coverage of the first terrestrial network cell 701. For example, although the electronic device 101 is located within the coverage of the first terrestrial network cell 701, the signal strength from the first terrestrial network cell 701 may not satisfy the cell reselection condition and/or may not satisfy the condition for measurement report for handover. The electronic device 101 may accordingly not camp on and/or handover to the first terrestrial network cell 701. Even in this case, if the cell identification information of the first terrestrial network cell 701 is identified, the electronic device 101 may be configured to store the identified cell identification information. For example, the electronic device 101 may store time-series information about identified cells as illustrated in Table 2.

**[Table 2]**

| time | identified cell information |
|---|---|
| T2 | PCI_1 |
| T1 | PCI_4 |
| ... | ... |

For example, the electronic device 101 may identify the fourth terrestrial network cell 704 at the first time (T1) and identify the first terrestrial network cell 701 at the second time (T2), and based on this, may store information as illustrated in Table 2. The electronic device 101 may identify a failure of the terrestrial network communication after the second time (T2). The electronic device 101 may perform a scan for non-terrestrial network communication based on the failure of the terrestrial network communication and detect a non-terrestrial network cell according to the scan result. The electronic device 101 may identify whether the first terrestrial network cell 701, which is the last identified terrestrial network cell before the failure of the terrestrial network communication, is a boundary cell. Based on the last identified first terrestrial network cell 701 being a boundary cell, it may perform at least one operation for access based on the detected non-terrestrial network cell. Meanwhile, in another example, the electronic device 101 may identify a failure of the terrestrial network communication after the second time (T2) and based on this, identify whether the first terrestrial network cell 701, which is the last identified terrestrial network cell before the failure of the terrestrial network communication, is a boundary cell. Based on the first terrestrial network cell 701 being a boundary cell, the electronic device 101 may be configured to perform a non-terrestrial network scan.

Meanwhile, when the electronic device 101 is turned on within a non-terrestrial network communication dedicated area, information as illustrated in Table 1 may not be stored. In this case, the electronic device 101 may perform an operation for access based on a non-terrestrial network cell or perform a scan for non-terrestrial network communication based on being turned on and identifying a failure of the terrestrial network communication (or identifying a failure in detecting a terrestrial network cell).

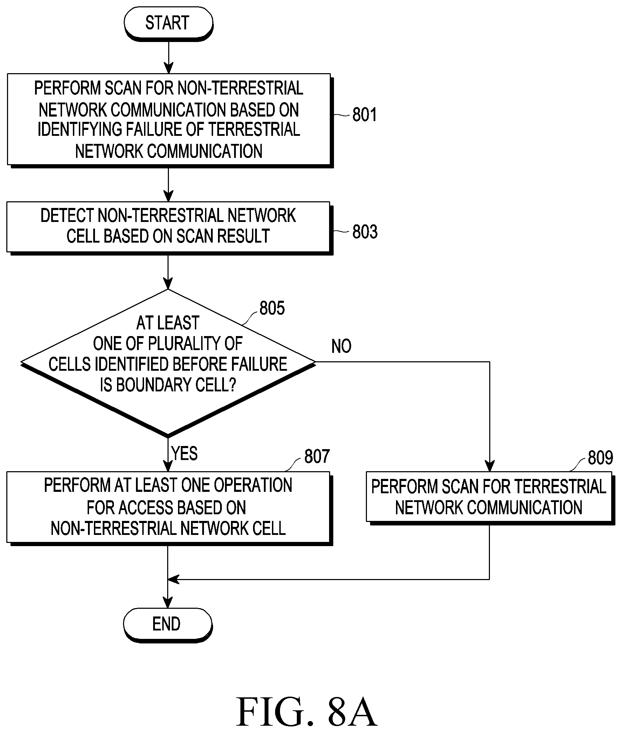

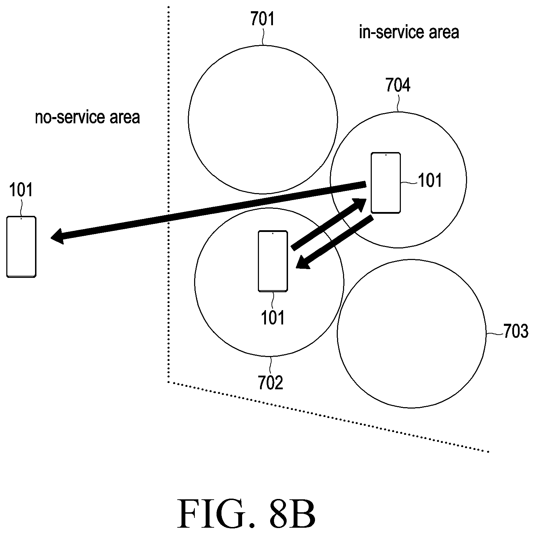

FIG. 8A is a flowchart illustrating an operation method of an electronic device according to an embodiment. The embodiment of FIG. 8A is described with reference to FIG. 8B. FIG. 8B is a view illustrating movement of an electronic device.

According to an embodiment, an electronic device 101 (e.g., the processor 120) may perform a scan for non-terrestrial network communication based on identifying a failure of terrestrial network communication in operation 801. The electronic device 101 may detect a non-terrestrial network cell based on the scan result in operation 803. The electronic device 101 may identify whether at least one of a plurality of cells identified before the failure of the terrestrial network communication is a boundary cell in operation 805. If it is identified that at least one of the plurality of cells identified before the failure of the terrestrial network communication is a boundary cell (operation 805-Yes), the electronic device 101 may perform at least one operation for access based on the non-terrestrial network cell in operation 807. If it is identified that at least one of the plurality of cells identified before the failure of the terrestrial network communication is not a boundary cell (operation 805-No), the electronic device 101 may perform a scan for terrestrial network communication in operation 809. The electronic device 101 may refrain from performing a scan for non-terrestrial network communication. For example, referring to FIG. 8B, the electronic device 101 may move in an area where a plurality of terrestrial network cells 701, 702, 703, 704 are deployed. For example, it is assumed that a first terrestrial network cell 701 and a second terrestrial network cell 702 are boundary cells, and a third terrestrial network cell 703 and a fourth terrestrial network cell 704 are configured as general cells that are not boundary cells. At a first time, the electronic device 101 may be located within the coverage of the fourth terrestrial network cell 704. At a second time, the electronic device 101 may be located within the coverage of the second terrestrial network cell 702. At a third time, the electronic device 101 may be located within the coverage of the fourth terrestrial network cell 704. At a fourth time, the electronic device 101 may leave the coverage of the fourth terrestrial network cell 704 and enter a non-terrestrial network communication dedicated area. For example, the electronic device 101 may store time-series information about identified cells as illustrated in Table 3.

**[Table 3]**

| time | identified cell information |
|---|---|
| T3 | PCI_4 |
| T2 | PCI_2 |
| T1 | PCI_4 |
| ... | ... |

For example, the electronic device 101 may identify the fourth terrestrial network cell 704 at the first time (T1), identify the second terrestrial network cell 702 at the second time (T2), identify the fourth terrestrial network cell 704 at the third time (T3), and based on this, may store information as illustrated in Table 3. The electronic device 101 may identify a failure of the terrestrial network communication after the third time (T3). The electronic device 101 may perform a scan for non-terrestrial network communication based on the failure of the terrestrial network communication and detect a non-terrestrial network cell according to the scan result. The electronic device 101 may identify whether a boundary cell is present among a designated number (e.g., 3, which is simply an exemplary number without limitation) of identified cells before the failure of the terrestrial network communication. For example, the second terrestrial network cell 702 among the designated number of identified cells before the failure of the terrestrial network communication may be identified as a boundary cell. The electronic device 101 may perform at least one operation for access based on the detected non-terrestrial network cell based on the existence of a boundary cell among the designated number of identified cells before the failure of the terrestrial network communication. Meanwhile, in another example, the electronic device 101 may identify a failure of the terrestrial network communication after the third time (T3) and based on this, identify whether a boundary cell is present among the designated number of identified cells before the failure of the terrestrial network communication. If it is identified that a boundary cell is present among the designated number of identified cells before the failure of the terrestrial network communication, the electronic device 101 may be configured to perform a non-terrestrial network scan. For example, if it is identified that no boundary cell is present among the designated number of identified cells before the failure of the terrestrial network communication, the electronic device 101 may be configured not to perform a non-terrestrial network scan, without limitation.

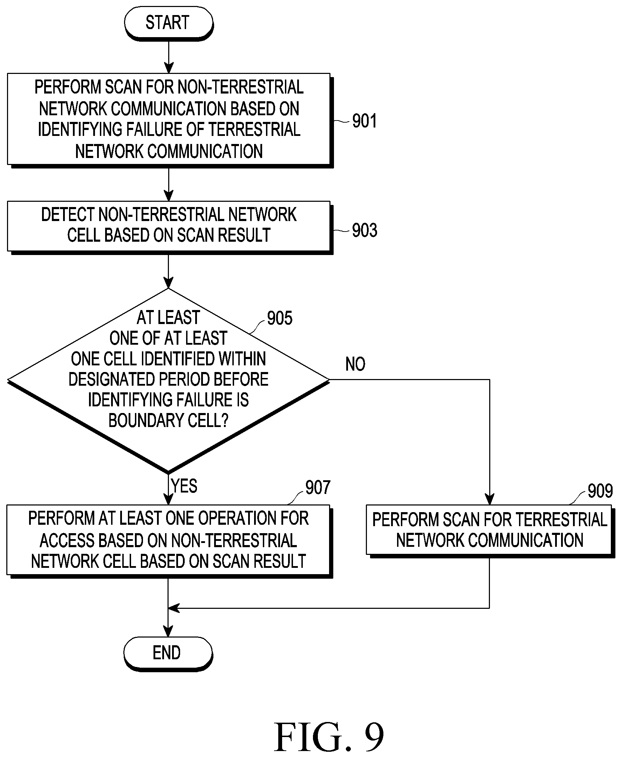

FIG. 9 is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 901. The electronic device 101 may detect a non-terrestrial network cell based on the scan result in operation 903. The electronic device 101 may identify whether at least one of at least one cell identified within a designated period before the failure of the terrestrial network communication is a boundary cell in operation 905. For example, the electronic device 101 may store information about terrestrial network cells identified by time as described with reference to Table 1, Table 2, or Table 3. The electronic device 101 may identify at least one terrestrial network cell identified within a designated period from the time when the failure of the terrestrial network communication is identified based on the stored information. If it is identified that at least one of at least one terrestrial network cell identified within the designated period is a boundary cell (operation 905-Yes), the electronic device 101 may perform at least one operation for access based on the non-terrestrial network cell in operation 907. If it is identified that at least one of at least one terrestrial network cell identified within the designated period is not a boundary cell (operation 905-No), the electronic device 101 may perform a scan for terrestrial network communication in operation 909. The electronic device 101 may refrain from performing a scan for non-terrestrial network communication.

Alternatively, the electronic device 101 may identify whether at least one of at least one cell identified within a designated period before the failure of the terrestrial network communication is a boundary cell based on identifying the failure of the terrestrial network communication. If it is identified that at least one of at least one terrestrial network cell identified within the designated period is a boundary cell, the electronic device 101 may perform a scan for non-terrestrial network communication. If it is identified that at least one of at least one terrestrial network cell identified within the designated period is not a boundary cell, the electronic device 101 may perform a scan for terrestrial network communication. In this case, the electronic device 101 may refrain from performing a scan for non-terrestrial network communication.

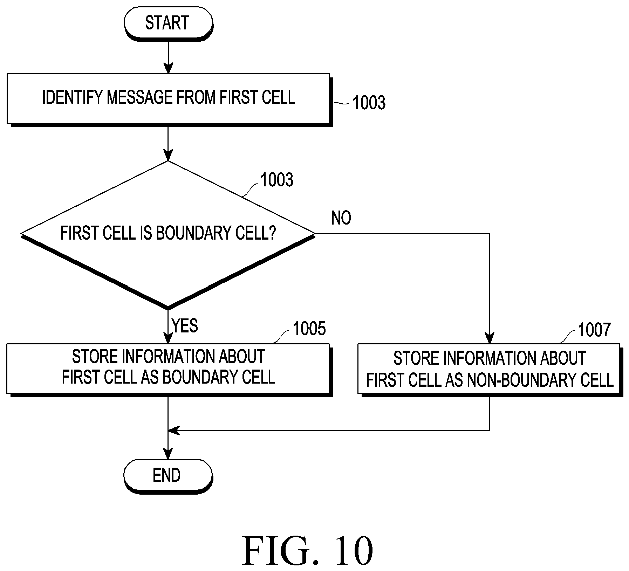

FIG. 10 is a flowchart illustrating an operation method of an electronic device according to an embodiment.

According to an embodiment, an electronic device 101 (e.g., the processor 120) may identify a message from a first cell in operation 1001. The electronic device 101 may identify whether the first cell is a boundary cell based on information included in the message from the first cell in operation 1003. If it is identified that the first cell is a boundary cell (operation 1003-Yes), the electronic device 101 may store information about the first cell, e.g., identification information of the first cell as a boundary cell in operation 1005. If it is identified that the first cell is not a boundary cell (operation 1003-No), the electronic device 101 may store information about the first cell, e.g., identification information of the first cell as a non-boundary cell in operation 1007. Meanwhile, according to implementation, only information of boundary cells described in operation 1005 or information of non-boundary cells described in operation 1007 may be stored. For example, the electronic device 101 may identify whether the first cell is a boundary cell based on information included in a system information block (SIB) from the first cell. For example, the first cell may include information (e.g., flag) indicating whether the first cell is a boundary cell in reserved bits of an existing SIB. When the information is represented as a flag, it may represent whether it is a boundary cell or a non-boundary cell as 1 bit. Meanwhile, including information in reserved bits of SIB is merely exemplary, and there is no limitation on the field in which the information is included. Moreover, SIB is also merely exemplary, and those skilled in the art will understand that information indicating whether the first cell is a boundary cell may be included in at least one message (e.g., a proprietary message designated by a manufacturer, but without limitation) among messages transmitted from the first cell. Meanwhile, a cell may include, in addition to information indicating whether the cell is a boundary cell, the type of service provided by the cell in the message.

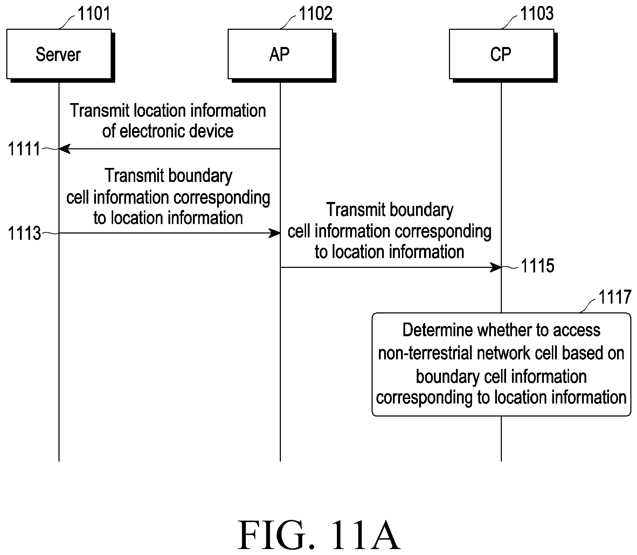

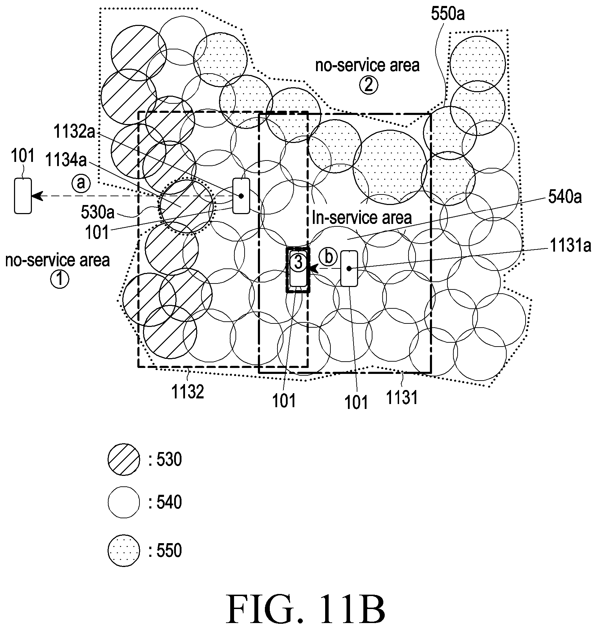

FIG. 11A is a flowchart illustrating an operation method of an electronic device according to an embodiment. The embodiment of FIG. 11A is described with reference to FIG. 11B. FIG. 11B is a view illustrating information on boundary cells for each area according to an embodiment.

According to an embodiment, an electronic device 101 may include an application processor 1102 (which may also be named CPU) and a communication processor 1103. The application processor 1102 may transmit location information of the electronic device 101 to, e.g., a server 1101 in operation 1111. The location information may be represented as, e.g., GPS coordinates, latitude/longitude coordinates, and/or tracking area (TA), but there is no limitation on the expression method. The server 1101 may store and/or manage information about boundary cells by location, e.g., but without limitation. The server 1101 may transmit boundary cell information corresponding to the location information to the electronic device 101 in operation 1113. The application processor 1102 may transmit/receive location information and boundary cell information corresponding to the location information on a client-server basis. Although FIG. 11A illustrates that the application processor 1102 can directly transmit/receive location information/boundary cell information with the server 1101 to represent that location information/boundary cell information is transmitted/received on a client-server basis, those skilled in the art will understand that the application processor 1102 can also transmit/receive location information/boundary cell information with the server 1101 through the communication processor 1103.

The application processor 1102 may transmit boundary cell information corresponding to the location information to the communication processor 1103 in operation 1115. The communication processor 1103 may determine whether to access a non-terrestrial network cell based on the boundary cell information corresponding to the location information in operation 1117. For example, as described with reference to FIG. 5A, the communication processor 1103 may perform a scan for non-terrestrial network communication based on the failure of the terrestrial network communication and detect a non-terrestrial network cell according to the scan result. The communication processor 1103 may identify whether to access based on the non-terrestrial network cell based on, e.g., cell boundary information received from the application processor 1102. For example, the communication processor 1103 may identify whether at least one of at least one cell identified before the failure of the terrestrial network communication is a boundary cell by referring to the boundary cell information received from the application processor 1102. When at least one of at least one cell identified before the failure of the terrestrial network communication is a boundary cell, the communication processor 1103 may perform at least one operation for access based on the detected non-terrestrial network cell. When at least one of at least one cell identified before the failure of the terrestrial network communication is not a boundary cell, the communication processor 1103 may refrain from performing at least one operation for access based on the detected non-terrestrial network cell.

Alternatively, the communication processor 1103 may identify whether to perform a scan for non-terrestrial network communication based on, e.g., cell boundary information received from the application processor 1102. For example, the communication processor 1103 may identify whether at least one of at least one cell identified before the failure of the terrestrial network communication is a boundary cell by referring to the boundary cell information received from the application processor 1102. When at least one of at least one cell identified before the failure of the terrestrial network communication is a boundary cell, the communication processor 1103 may perform a scan for non-terrestrial network communication. When at least one of at least one cell identified before the failure of the terrestrial network communication is not a boundary cell, the communication processor 1103 may refrain from performing a scan for non-terrestrial network communication.

For example, referring to FIG. 11B, the electronic device 101 may transmit location information of the electronic device 101 to the server 1101 while located at a first location 1131a. The server 1101 may transmit information about boundary cells included in a first area 1131 corresponding to the first location 1131a to the electronic device 101. Accordingly, when the electronic device 101 enters the third area (③) from the first location 1131a, based on at least one cell identified before identifying the failure of the terrestrial network communication not being included in the boundary cells included in the received first area 1131, it may refrain from performing access based on the non-terrestrial network cell or refrain from performing a scan for non-terrestrial network communication.

For example, referring to FIG. 11B, the electronic device 101 may transmit location information of the electronic device 101 to the server 1101 while located at a second location 1132a. The server 1101 may transmit information about boundary cells included in a second area 1132 corresponding to the second location 1132a to the electronic device 101. Accordingly, when the electronic device 101 enters the second area (②) from the second location 1132a, based on at least one cell (e.g., 1134a) identified before identifying the failure of the terrestrial network communication being included in the boundary cells included in the second area 1132, it may perform at least one operation for access based on the non-terrestrial network cell or perform a scan for non-terrestrial network communication. Meanwhile, there is no limitation on the size and/or shape of the above-described areas 1131, 1132.

Meanwhile, as described above, the electronic device 101 receiving information about boundary cells from the server 1101 on a client-server basis is merely exemplary. For example, based on newly entering a defined area (e.g., tracking area (TA), but without limitation), the electronic device 101 may receive information about boundary cells included in the defined area from the network, and there is no limitation on the subject managing and/or providing information about boundary cells.

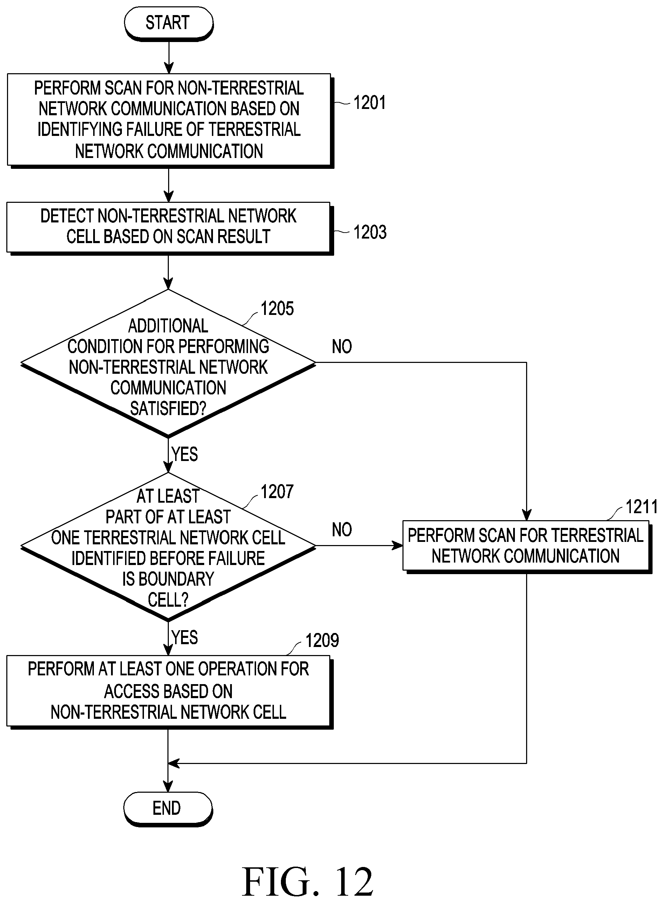

FIG. 12 is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1201. The electronic device 101 may detect a non-terrestrial network cell based on the scan result in operation 1203. The electronic device 101 may identify whether an additional condition for performing non-terrestrial network communication is satisfied in operation 1205. In an example, the electronic device 101 may identify whether there is a service requested to be performed as whether an additional condition for performing non-terrestrial network communication is satisfied. In an example, the electronic device 101 may identify whether a service requested to be performed is a non-terrestrial network-dedicated service as whether an additional condition for performing non-terrestrial network communication is satisfied. In an example, the electronic device 101 may identify whether a timer initiated based on a trigger event (e.g., failure of terrestrial network communication) has expired as whether an additional condition for performing non-terrestrial network communication is satisfied, and there is no limitation on the type of additional condition for performing non-terrestrial network communication. If the additional condition for performing non-terrestrial network communication is not satisfied (operation 1205-No), the electronic device 101 may perform a scan for terrestrial network communication in operation 1211. For example, the electronic device 101 may refrain from performing a scan for non-terrestrial network communication. If the additional condition for performing non-terrestrial network communication is satisfied (operation 1205-Yes), the electronic device 101 may identify whether at least part of at least one terrestrial network cell identified before identifying the failure of the terrestrial network communication is a boundary cell in operation 1207. Meanwhile, there is no limitation on the order of execution between operation 1205 and operation 1207. If it is identified that at least part of at least one terrestrial network cell identified before the failure of the terrestrial network communication is not a boundary cell (operation 1207-No), the electronic device 101 may perform a scan for terrestrial network communication in operation 1211. For example, the electronic device 101 may refrain from performing a scan for non-terrestrial network communication. If it is identified that at least part of at least one terrestrial network cell identified before the failure of the terrestrial network communication is a boundary cell (operation 1207-Yes), the electronic device 101 may perform at least one operation for access based on the non-terrestrial network cell in operation 1209.

Alternatively, after identifying the failure of the terrestrial network communication, the electronic device 101 may perform a scan for non-terrestrial network communication based on an additional condition for non-terrestrial network communication being satisfied and at least part of at least one terrestrial network cell identified before the failure of the terrestrial network communication being a boundary cell. If the additional condition for non-terrestrial network communication is not satisfied or based on at least part of at least one terrestrial network cell identified before the failure of the terrestrial network communication not being a boundary cell, the electronic device 101 may refrain from performing a scan for non-terrestrial network communication.

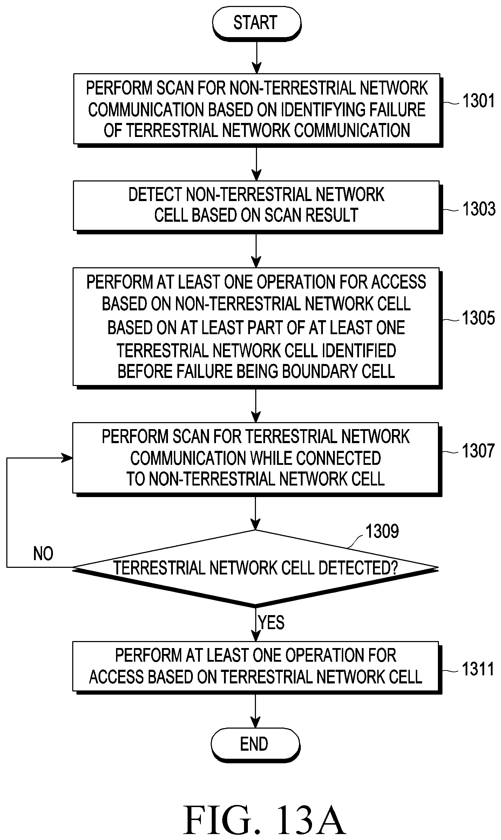

FIG. 13A is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1301. The electronic device 101 may detect a non-terrestrial network cell based on the scan result in operation 1303. The electronic device 101 may perform at least one operation for access based on the non-terrestrial network cell based on at least part of at least one terrestrial network cell identified before the failure of the terrestrial network communication being a boundary cell in operation 1305. Accordingly, the electronic device 101 may complete access based on the non-terrestrial network cell. The electronic device 101 may perform a scan for terrestrial network communication while connected to the non-terrestrial network cell in operation 1307. The electronic device 101 may identify whether a terrestrial network cell is detected based on the scan result for terrestrial network communication in operation 1309. If a terrestrial network cell is not detected (1309-No), the electronic device 101 may perform a scan for terrestrial network communication while maintaining the connection to the non-terrestrial network cell. If a terrestrial network cell is detected (1309-Yes), the electronic device 101 may perform at least one operation for access based on the terrestrial network cell in operation 1311.

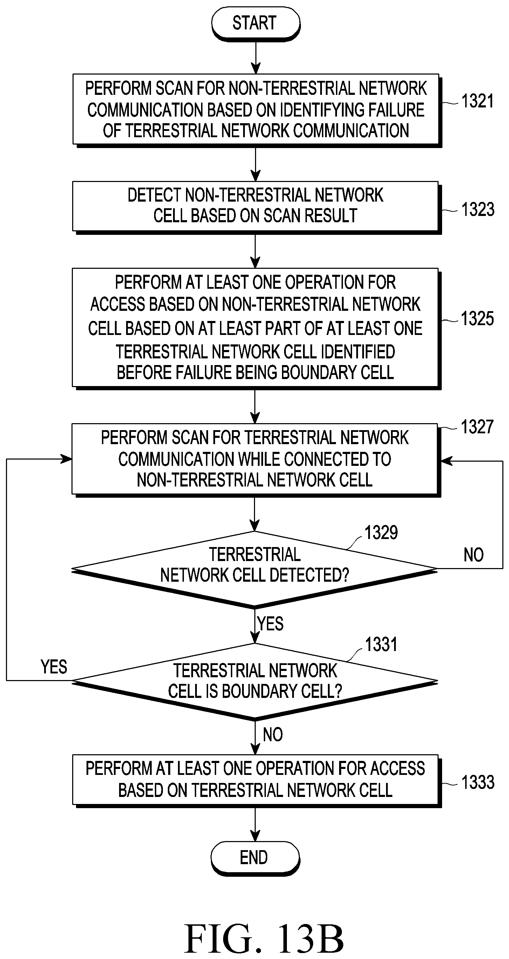

FIG. 13B is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1321. The electronic device 101 may detect a non-terrestrial network cell based on the scan result in operation 1323. The electronic device 101 may perform at least one operation for access based on the non-terrestrial network cell based on at least part of at least one terrestrial network cell identified before the failure of the terrestrial network communication being a boundary cell in operation 1325. Accordingly, the electronic device 101 may complete access based on the non-terrestrial network cell. The electronic device 101 may perform a scan for terrestrial network communication while connected to the non-terrestrial network cell in operation 1327. The electronic device 101 may identify whether a terrestrial network cell is detected based on the scan result for terrestrial network communication in operation 1329. If a terrestrial network cell is not detected (1329-No), the electronic device 101 may perform a scan for terrestrial network communication while maintaining the connection to the non-terrestrial network cell. If a terrestrial network cell is detected (1329-Yes), the electronic device 101 may identify whether the detected terrestrial network cell is a boundary cell in operation 1331. If the detected terrestrial network cell is a boundary cell (operation 1331-Yes), the electronic device 101 may perform a scan for terrestrial network communication while maintaining the connection to the non-terrestrial network cell. Meanwhile, maintaining the connection to the non-terrestrial network cell when the detected terrestrial network cell is a boundary cell is exemplary, and in another example, those skilled in the art will understand that the electronic device 101 may be implemented to perform at least one operation for access to the detected terrestrial network cell. In this case, the electronic device 101 may refrain from performing at least one operation for access based on the detected terrestrial network cell. If the detected terrestrial network cell is not a boundary cell (operation 1331-No), the electronic device 101 may perform at least one operation for access based on the detected terrestrial network cell in operation 1333. For example, when the electronic device 101 moves near the boundary of a non-terrestrial network communication dedicated area, the electronic device 101 may re-enter the non-terrestrial network communication dedicated area. In this case, as the electronic device 101 temporarily accesses a terrestrial network cell and then attempts to access a non-terrestrial network cell again, there is a relatively high possibility that resources of the non-terrestrial network cell for access may be consumed by the access procedure. When the electronic device 101 detects a terrestrial network cell after accessing a non-terrestrial network cell, if the terrestrial network cell is a boundary cell, it may be configured to refrain from (or defer) access, and if the terrestrial network cell is not a boundary cell, it may be configured to perform access, thereby relatively reducing the possibility that resources of the non-terrestrial network cell for access may be consumed by the access procedure.

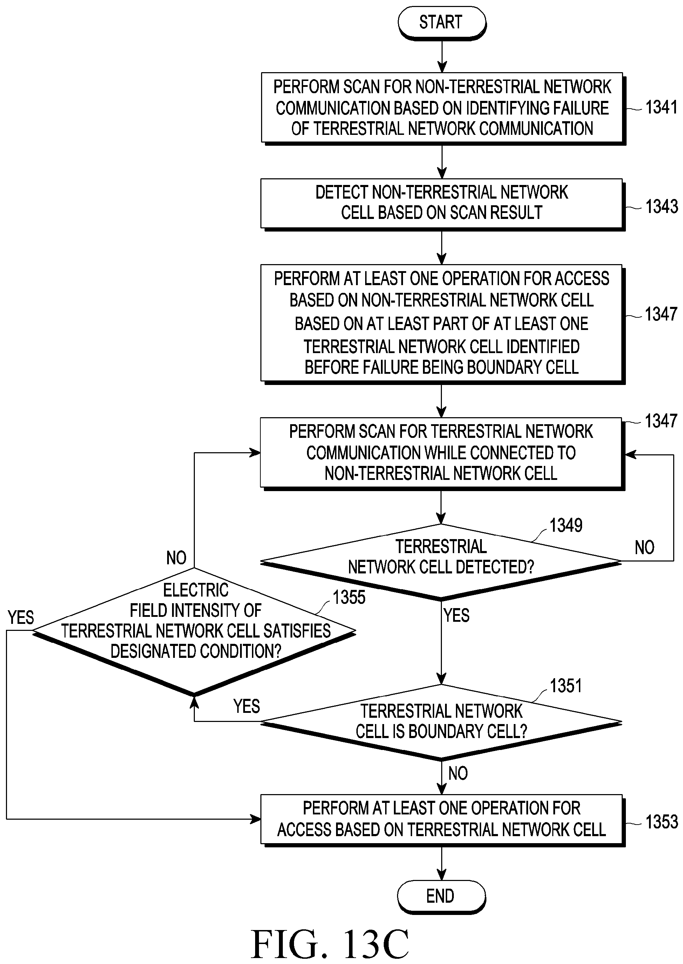

FIG. 13C is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1341. The electronic device 101 may detect a non-terrestrial network cell based on the scan result in operation 1343. The electronic device 101 may perform at least one operation for access based on the non-terrestrial network cell based on at least part of at least one terrestrial network cell identified before the failure of the terrestrial network communication being a boundary cell in operation 1345. Accordingly, the electronic device 101 may complete access based on the non-terrestrial network cell. The electronic device 101 may perform a scan for terrestrial network communication while connected to the non-terrestrial network cell in operation 1347. The electronic device 101 may identify whether a terrestrial network cell is detected based on the scan result for terrestrial network communication in operation 1349. If a terrestrial network cell is not detected (1349-No), the electronic device 101 may perform a scan for terrestrial network communication while maintaining the connection to the non-terrestrial network cell. If a terrestrial network cell is detected (1349-Yes), the electronic device 101 may identify whether the detected terrestrial network cell is a boundary cell in operation 1351. If the detected terrestrial network cell is a boundary cell (operation 1351-Yes), the electronic device 101 may identify whether the electric field intensity of the terrestrial network cell satisfies a designated condition in operation 1355. For example, the electronic device 101 may identify whether the intensity (e.g., RSRP, but without limitation) of a signal (e.g., synchronization signal and/or reference signal, but without limitation) from the terrestrial network cell is equal to or greater than a threshold intensity as whether the electric field intensity of the terrestrial network cell satisfies the designated condition, but there is no limitation on the implementation example of the designated condition. If the electric field intensity of the terrestrial network cell does not satisfy the designated condition (operation 1355-No), the electronic device 101 may perform a scan for terrestrial network communication while maintaining the connection to the non-terrestrial network cell. If the electric field intensity of the terrestrial network cell satisfies the designated condition (operation 1355-Yes), the electronic device 101 may perform at least one operation for access based on the terrestrial network cell in operation 1353. If the detected terrestrial network cell is not a boundary cell (operation 1351-No), the electronic device 101 may perform at least one operation for access based on the terrestrial network cell in operation 1353.

As described above, when moving near the boundary of a non-terrestrial network communication dedicated area, the electronic device 101 may re-enter the non-terrestrial network communication dedicated area. In this case, as the electronic device 101 temporarily accesses a terrestrial network cell and then attempts to access a non-terrestrial network cell again, there is a relatively high possibility that resources of the non-terrestrial network cell for access may be consumed by the access procedure. In this case, relatively poor electric field intensity of a boundary cell may mean that the electronic device 101 has a relatively high possibility of re-entering the non-terrestrial network communication dedicated area, and relatively good electric field intensity of a boundary cell may mean that the electronic device 101 has a relatively low possibility of re-entering the non-terrestrial network communication dedicated area. Accordingly, when the designated condition indicating that the electric field intensity of the boundary cell is relatively good is satisfied, the electronic device 101 may perform an operation for access to the terrestrial network cell, and the possibility that resources of the non-terrestrial network cell for access may be consumed by the access procedure may be relatively decreased.

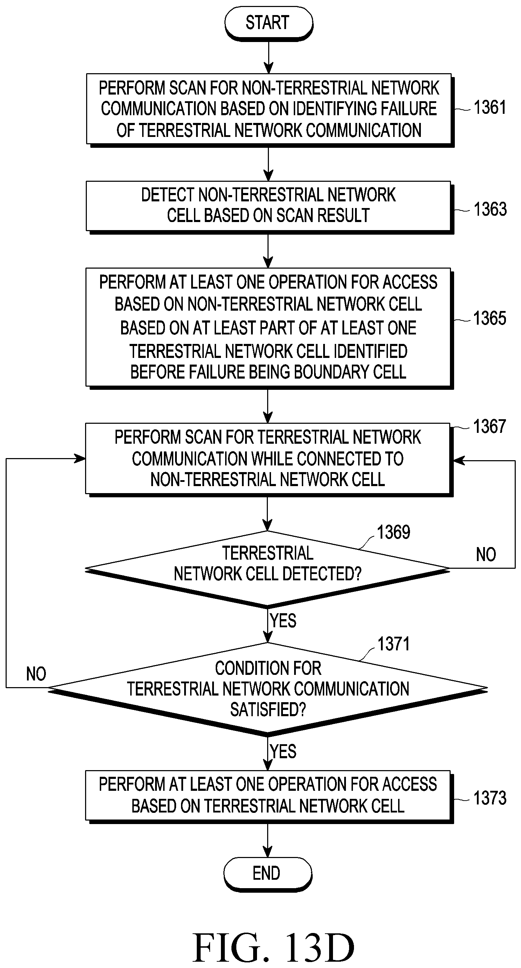

FIG. 13D is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1361. The electronic device 101 may detect a non-terrestrial network cell based on the scan result in operation 1363. The electronic device 101 may perform at least one operation for access based on the non-terrestrial network cell based on at least part of at least one terrestrial network cell identified before the failure of the terrestrial network communication being a boundary cell in operation 1365. Accordingly, the electronic device 101 may complete access based on the non-terrestrial network cell. The electronic device 101 may perform a scan for terrestrial network communication while connected to the non-terrestrial network cell in operation 1367. The electronic device 101 may identify whether a terrestrial network cell is detected based on the scan result for terrestrial network communication in operation 1369. If a terrestrial network cell is not detected (1369-No), the electronic device 101 may perform a scan for terrestrial network communication while maintaining the connection to the non-terrestrial network cell. If a terrestrial network cell is detected (1369-Yes), the electronic device 101 may identify whether a condition for terrestrial network communication is satisfied in operation 1371. In an example, the electronic device 101 may identify whether there is a service requested to be performed as whether a condition for terrestrial network communication is satisfied. In an example, the electronic device 101 may identify whether a service requested to be performed is a terrestrial network-dedicated service (or non-terrestrial network-unsupported service) as whether a condition for terrestrial network communication is satisfied, and there is no limitation on the type of condition for terrestrial network communication. If the condition for terrestrial network communication is not satisfied (operation 1371-No), the electronic device 101 may perform a scan for terrestrial network communication while maintaining the connection to the non-terrestrial network cell. If the condition for terrestrial network communication is satisfied (operation 1371-Yes), the electronic device 101 may perform at least one operation for access based on the terrestrial network cell in operation 1373. As described above, the electronic device 101 may access a terrestrial network cell when a service for a terrestrial network (or non-terrestrial network-unsupported service) is requested or when data transmission/reception is requested.

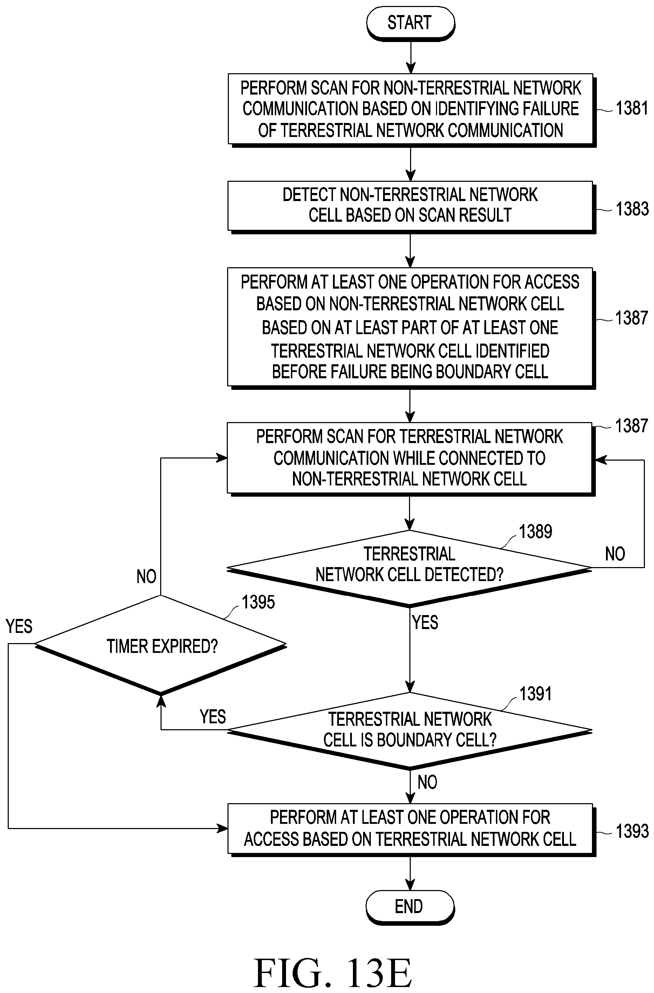

FIG. 13E is a flowchart illustrating an operation method of an electronic device according to an embodiment.

According to an embodiment, an electronic device 101 (e.g., the processor 120) may perform a scan for non-terrestrial network communication based on identifying a failure of terrestrial network communication in operation 1381. The electronic device 101 may detect a non-terrestrial network cell based on the scan result in operation 1383. The electronic device 101 may perform at least one operation for access based on the non-terrestrial network cell based on at least part of at least one terrestrial network cell identified before the failure of the terrestrial network communication being a boundary cell in operation 1385. Accordingly, the electronic device 101 may complete access based on the non-terrestrial network cell. The electronic device 101 may perform a scan for terrestrial network communication while connected to the non-terrestrial network cell in operation 1387. The electronic device 101 may identify whether a terrestrial network cell is detected based on the scan result for terrestrial network communication in operation 1389. If a terrestrial network cell is not detected (1389-No), the electronic device 101 may perform a scan for terrestrial network communication while maintaining the connection to the non-terrestrial network cell. If a terrestrial network cell is detected (1389-Yes), the electronic device 101 may identify whether the detected terrestrial network cell is a boundary cell in operation 1391. If the detected terrestrial network cell is a boundary cell (operation 1391-Yes), the electronic device 101 may identify whether a timer expires in operation 1395. The timer in FIG. 13E may be initiated based on, e.g., detection of a boundary cell, but there is no limitation on the trigger for initiation. If the timer has not expired (operation 1395-No), the electronic device 101 may perform a scan for terrestrial network communication while maintaining the connection to the non-terrestrial network cell. If the timer has expired (operation 1395-Yes), the electronic device 101 may perform at least one operation for access based on the terrestrial network cell in operation 1393. If the detected terrestrial network cell is not a boundary cell (operation 1391-No), the electronic device 101 may perform at least one operation for access based on the terrestrial network cell in operation 1393.

According to an embodiment, a storage medium storing at least one computer-readable instruction may be provided. The at least one instruction may, when executed by at least one processor 120 of an electronic device 101, cause the electronic device 101 to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The at least one operation may include performing at least one operation for access based on the non-terrestrial network cell based on a terrestrial network cell of the identified at least one terrestrial network cell being identified as one of the plurality of boundary cells.

According to an embodiment, the at least one operation may include refraining from performing the at least one operation for access based on the non-terrestrial network cell and performing a scan for a terrestrial network cell based on the identified at least one terrestrial network cell not being the boundary cell.

According to an embodiment, identifying whether at least one terrestrial network cell identified before identifying the failure of the terrestrial network communication is one of a plurality of boundary cells associated with a non-terrestrial network communication dedicated area may identify whether a last terrestrial network cell identified before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of a designated number of terrestrial network cells identified before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of at least one terrestrial network cell identified during a designated period before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of the at least one terrestrial network cell is one of the plurality of boundary cells based on whether cell identification information corresponding to one of the plurality of boundary cells matches at least part of cell identification information of each of the at least one terrestrial network cell identified before identifying the failure of the terrestrial network communication.

According to an embodiment, the at least one operation may include receiving messages from each of a plurality of cells, the messages each including information indicating whether each of the plurality of cells is a boundary cell. The at least one operation may include storing a plurality of pieces of cell identification information corresponding to the plurality of boundary cells based on each of the information included in each of the messages.

According to an embodiment, the at least one operation may include obtaining and storing a plurality of pieces of cell identification information corresponding to the plurality of boundary cells from another processor of the electronic device 101.

According to an embodiment, the at least one operation may include performing a scan for terrestrial network communication after completion of the access based on the non-terrestrial network cell based on the at least one operation for access based on the non-terrestrial network cell. The at least one operation may include identifying a first terrestrial network cell according to the result of performing the scan for terrestrial network communication. The at least one operation may include performing at least one operation for access based on the first terrestrial network cell after a designated period elapses after identifying the first terrestrial network cell based on the first terrestrial network cell being one of the plurality of boundary cells.

According to an embodiment, the at least one operation may include performing a scan for terrestrial network communication after completion of the access based on the non-terrestrial network cell based on the at least one operation for access based on the non-terrestrial network cell. According to an embodiment, the at least one operation may include identifying a first terrestrial network cell according to the result of performing the scan for terrestrial network communication. According to an embodiment, the at least one operation may include performing at least one operation for access based on the first terrestrial network cell upon an electric field intensity of the first terrestrial network cell satisfying a designated condition based on the first terrestrial network cell being one of the plurality of boundary cells.

According to an embodiment, the at least one operation may include performing a scan for terrestrial network communication after completion of the access based on the non-terrestrial network cell based on the at least one operation for access based on the non-terrestrial network cell. The at least one operation may include identifying a first terrestrial network cell according to the result of performing the scan for terrestrial network communication. The at least one operation may include performing at least one operation for access based on the first terrestrial network cell based on the first terrestrial network cell not being one of the plurality of boundary cells.

According to an embodiment, an electronic device 101 may comprise memory 130 storing at least one instruction. The electronic device 101 may comprise a processor 120 connected to the memory 130. The at least one instruction, when executed by the processor 120, may cause the electronic device 101 to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The at least one operation may include performing at least one operation for access based on the non-terrestrial network cell based on a terrestrial network cell of the identified at least one terrestrial network cell being identified as one of the plurality of boundary cells.

According to an embodiment, the at least one operation may include refraining from performing the at least one operation for access based on the non-terrestrial network cell and performing a scan for a terrestrial network cell based on the identified at least one terrestrial network cell not being the boundary cell.

According to an embodiment, identifying whether at least one terrestrial network cell identified before identifying the failure of the terrestrial network communication is one of a plurality of boundary cells associated with a non-terrestrial network communication dedicated area may identify whether a last terrestrial network cell identified before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of a designated number of terrestrial network cells identified before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of at least one terrestrial network cell identified during a designated period before identifying the failure of the terrestrial network communication is one of the plurality of boundary cells.

According to an embodiment, identifying whether at least one terrestrial network cell identified before identifying the failure of the terrestrial network communication is one of a plurality of boundary cells associated with a non-terrestrial network communication dedicated area may identify whether at least part of the at least one terrestrial network cell is one of the plurality of boundary cells based on whether cell identification information corresponding to one of the plurality of boundary cells matches at least part of cell identification information of each of the at least one terrestrial network cell identified before identifying the failure of the terrestrial network communication.

According to an embodiment, the at least one operation may include receiving messages from each of a plurality of cells, the messages each including information indicating whether each of the plurality of cells is a boundary cell. The at least one operation may include storing a plurality of pieces of cell identification information corresponding to the plurality of boundary cells based on each of the information included in each of the messages.

According to an embodiment, the at least one operation may include obtaining and storing a plurality of pieces of cell identification information corresponding to the plurality of boundary cells from another processor of the electronic device 101.

According to an embodiment, the at least one operation may include performing a scan for terrestrial network communication after completion of the access based on the non-terrestrial network cell based on the at least one operation for access based on the non-terrestrial network cell. The at least one operation may include identifying a first terrestrial network cell according to the result of performing the scan for terrestrial network communication. The at least one operation may include performing at least one operation for access based on the first terrestrial network cell after a designated period elapses after identifying the first terrestrial network cell based on the first terrestrial network cell being one of the plurality of boundary cells.

According to an embodiment, the at least one operation may include performing a scan for terrestrial network communication after completion of the access based on the non-terrestrial network cell based on the at least one operation for access based on the non-terrestrial network cell. According to an embodiment, the at least one operation may include identifying a first terrestrial network cell according to the result of performing the scan for terrestrial network communication. According to an embodiment, the at least one operation may include performing at least one operation for access based on the first terrestrial network cell upon an electric field intensity of the first terrestrial network cell satisfying a designated condition based on the first terrestrial network cell being one of the plurality of boundary cells.

According to an embodiment, the at least one operation may include performing a scan for terrestrial network communication after completion of the access based on the non-terrestrial network cell based on the at least one operation for access based on the non-terrestrial network cell. The at least one operation may include identifying a first terrestrial network cell according to the result of performing the scan for terrestrial network communication. The at least one operation may include performing at least one operation for access based on the first terrestrial network cell based on the first terrestrial network cell not being one of the plurality of boundary cells.

According to an embodiment, a method of operating an electronic device 101, the method of operating the electronic device 101 may include performing a scan for non-terrestrial network communication based on identifying a failure of terrestrial network communication performed via a terrestrial network cell. The method of operating the electronic device 101 may include detecting a non-terrestrial network cell based on the result of the scan. The at least one operation may include identifying whether at least one terrestrial network cell identified before identifying the failure of the terrestrial network communication is one of a plurality of boundary cells associated with a non-terrestrial network communication dedicated area. The method of operating the electronic device 101 may include performing at least one operation for access based on the non-terrestrial network cell based on a terrestrial network cell of the identified at least one terrestrial network cell being identified as one of the plurality of boundary cells.

According to an embodiment, a storage medium storing at least one computer-readable instruction may be provided. The at least one instruction may, when executed by at least one processor 120 of an electronic device 101, cause the electronic device 101 to perform at least one operation. The at least one operation may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The at least one operation may include performing a scan for non-terrestrial network communication based on a terrestrial network cell of the identified at least one terrestrial network cell being identified as one of the plurality of boundary cells.

According to an embodiment, an electronic device 101 may comprise memory 130 storing at least one instruction. The electronic device 101 may comprise a processor 120 connected to the memory 130. The at least one instruction, when executed by the processor 120, may cause the electronic device 101 to perform at least one operation. The at least one operation may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The at least one operation may include performing a scan for non-terrestrial network communication based on a terrestrial network cell of the identified at least one terrestrial network cell being identified as one of the plurality of boundary cells.

According to an embodiment, a method of operating an electronic device 101 may include identifying whether at least part of at least one terrestrial network cell identified before identifying the failure of the terrestrial network communication is one of a plurality of boundary cells associated with a non-terrestrial network communication dedicated area based on identifying a failure of terrestrial network communication performed via a terrestrial network cell. The method of operating the electronic device 101 may include performing a scan for non-terrestrial network communication based on a terrestrial network cell of the identified at least one terrestrial network cell being identified as one of the plurality of boundary cells.

According to an embodiment, a storage medium storing at least one computer-readable instruction may be provided. The at least one instruction may, when executed by at least one processor 120 of an electronic device 101, cause the electronic device 101 to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include performing at least one operation for access based on the non-terrestrial network cell based on at least one terrestrial network cell identified before identifying the failure of the terrestrial network communication being a first cell. The at least one operation may include refraining from performing the at least one operation for access based on the non-terrestrial network cell based on at least one terrestrial network cell identified before identifying the failure of the terrestrial network communication being a second cell different from the first cell.

According to an embodiment, an electronic device 101 may comprise memory 130 storing at least one instruction. The electronic device 101 may comprise a processor 120 connected to the memory 130. The at least one instruction, when executed by the processor 120, may cause the electronic device 101 to perform at least one operation. The at least one operation may include performing a scan for non-terrestrial network communication based on identifying a failure of terrestrial network communication performed via a terrestrial network cell. The at least one operation may include detecting a non-terrestrial network cell based on the result of the scan. The at least one operation may include performing at least one operation for access based on the non-terrestrial network cell based on at least one terrestrial network cell identified before identifying the failure of the terrestrial network communication being a first cell. The at least one operation may include refraining from performing the at least one operation for access based on the non-terrestrial network cell based on at least one terrestrial network cell identified before identifying the failure of the terrestrial network communication being a second cell different from the first cell.

According to an embodiment, a method of operating an electronic device 101 may include performing a scan for non-terrestrial network communication based on identifying a failure of terrestrial network communication performed via a terrestrial network cell. The method of operating the electronic device 101 may include detecting a non-terrestrial network cell based on the result of the scan. The method of operating the electronic device 101 may include performing at least one operation for access based on the non-terrestrial network cell based on at least one terrestrial network cell identified before identifying the failure of the terrestrial network communication being a first cell. The method of operating the electronic device 101 may include refraining from performing the at least one operation for access based on the non-terrestrial network cell based on at least one terrestrial network cell identified before identifying the failure of the terrestrial network communication being a second cell different from the first cell.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A non-transitory computer readable medium storing instructions, wherein the instructions, when executed by at least one processor (120) of an electronic device (101), cause the electronic device (101) to perform at least one operation comprising:
based on identifying a failure of a terrestrial network communication performed via a terrestrial network cell, performing a scan for a non-terrestrial network (non-terrestrial network) communication;
based on a result of the scan, detecting a non-terrestrial network cell;
identifying whether at least one terrestrial network cell which is identified before the failure of the terrestrial network communication is one of a plurality of boundary cells associated with a non-terrestrial network communication dedicated area or not; and
based on a terrestrial network cell of the at least one terrestrial network cell being identified as one of the plurality of boundary cells, performing at least one operation for access based on the non-terrestrial network cell.

2. The non-transitory computer readable medium of claim 1, wherein the at least one operation comprises:
based on the at least one terrestrial network cell not being the one of the plurality of boundary cells, refraining from performing the at least one operation for the access based on the non-terrestrial network cell and performing a scan for the terrestrial network communication.

3. The non-transitory computer readable medium of claim 1 or 2, wherein identifying whether at least one terrestrial network cell which is identified before the failure of the terrestrial network communication is one of a plurality of boundary cells associated with a non-terrestrial network communication dedicated area or not comprises:
identifying whether a last terrestrial network cell identified before the failure of the terrestrial network communication is the one of the plurality of boundary cells or not.

4. The non-transitory computer readable medium of any one of claims 1 to 3, wherein identifying whether at least one terrestrial network cell which is identified before the failure of the terrestrial network communication is one of a plurality of boundary cells associated with a non-terrestrial network communication dedicated area or not comprises:
identifying whether at least part of a designated number of terrestrial network cells identified before the failure of the terrestrial network communication is one of the plurality of boundary cells or not.

5. The non-transitory computer readable medium of any one of claims 1 to 4, wherein identifying whether at least one terrestrial network cell which is identified before the failure of the terrestrial network communication is one of a plurality of boundary cells associated with a non-terrestrial network communication dedicated area or not comprises:
identifying whether at least part of at least one terrestrial network cell which is identified during a designated period before the identification of the failure of the terrestrial network communication is the one of the plurality of boundary cells or not.

6. The non-transitory computer readable medium of any one of claims 1 to 5, wherein identifying whether at least one terrestrial network cell which is identified before the failure of the terrestrial network communication is one of a plurality of boundary cells associated with a non-terrestrial network communication dedicated area or not comprises:
identifying whether the at least part of the at least one terrestrial network cell is one of the plurality of boundary cells or not based on whether cell identification information corresponding to one of the plurality of boundary cells is identical to at least part of cell identification information of each of the at least one terrestrial network cell which is identified before the failure of the terrestrial network communication.

7. The non-transitory computer readable medium of any one of claims 1 to 6, wherein the at least one operation comprises:
receiving a plurality of messages respectively from a plurality of cells, wherein the plurality of messages respectively comprises a plurality of pieces of information, and the plurality of pieces of information respectively indicates whether each of the plurality of cells is a boundary cell or not; and
storing a plurality of pieces of cell identification information corresponding to the plurality of boundary cells based on each of the plurality of pieces of information.

8. The non-transitory computer readable medium of any one of claims 1 to 7, wherein the at least one operation comprises:
acquiring a plurality of pieces of cell identification information corresponding to the plurality of boundary cells from another processor of the electronic device, and storing the plurality of pieces of cell identification information corresponding to the plurality of boundary cells.

9. The non-transitory computer readable medium of any one of claims 1 to 8, wherein the at least one operation comprises:
after completion of the access based on the non-terrestrial network cell based on the at least one operation for access based on the non-terrestrial network cell, performing a scan for the terrestrial network communication;
based on a result of the scan for the terrestrial network communication, identifying a first terrestrial network cell; and
based on the first terrestrial network cell being one of the plurality of boundary cells, performing at least one operation for access based on the first terrestrial network cell after a designated period elapses after identifying the first terrestrial network cell.

10. The non-transitory computer readable medium of any one of claims 1 to 9, wherein the at least one operation comprises:
after completion of the access based on the non-terrestrial network cell based on the at least one operation for access based on the non-terrestrial network cell, performing a scan for the terrestrial network communication;
based on a result of the scan for the terrestrial network communication, identifying a first terrestrial network cell; and
based on the first terrestrial network cell being one of the plurality of boundary cells, performing at least one operation for access based on the first terrestrial network cell based on an electric field intensity of the first terrestrial network cell satisfying a designated condition.

11. The non-transitory computer readable medium of any one of claims 1 to 10, wherein the at least one operation comprises:
after completion of the access based on the non-terrestrial network cell based on the at least one operation for access based on the non-terrestrial network cell, performing a scan for the terrestrial network communication;
based on a result of the scan for the terrestrial network communication, identifying a first terrestrial network cell; and
based on the first terrestrial network cell not being one of the plurality of boundary cells, performing at least one operation for access based on the first terrestrial network cell.

12. A storage medium storing at least one computer-readable instruction, wherein the at least one instruction, when executed by at least one processor (120) of an electronic device (101), causes the electronic device (101) to perform at least one operation, the at least one operation comprising:
based on identifying a failure of terrestrial network communication performed via a terrestrial network cell, identifying whether at least part of at least one terrestrial network cell identified before identifying the failure of the terrestrial network communication is one of a plurality of boundary cells associated with a non-terrestrial network communication dedicated area; and
based on a terrestrial network cell of the identified at least one terrestrial network cell being identified as one of the plurality of boundary cells, performing a scan for non-terrestrial network communication.

13. The storage medium of claim 12, wherein the at least one operation comprises:
based on the identified at least one terrestrial network cell not being one of the plurality of boundary cells, refraining from performing the scan for the non-terrestrial network communication and performing a scan for a terrestrial network cell.

14. The storage medium of claim 12 or 13, wherein identifying whether at least part of at least one terrestrial network cell identified before identifying the failure of the terrestrial network communication is a boundary cell associated with a non-terrestrial network communication dedicated area includes:
identifying whether a last terrestrial network cell identified before identifying the failure of the terrestrial network communication is one of the plurality of boundary cells.

15. A storage medium storing at least one computer-readable instruction, wherein the at least one instruction, when executed by at least one processor (120) of an electronic device (101), causes the electronic device (101) to perform at least one operation, the at least one operation comprising:
based on identifying a failure of terrestrial network communication performed via a terrestrial network cell, performing a scan for non-terrestrial network communication;
based on a result of the scan, detecting a non-terrestrial network cell;
based on at least one terrestrial network cell identified before identifying the failure of the terrestrial network communication being a first cell, performing at least one operation for access based on the non-terrestrial network cell; and
based on at least one terrestrial network cell identified before identifying the failure of the terrestrial network communication being a second cell different from the first cell, refraining from performing the at least one operation for access based on the non-terrestrial network cell.
